# FASCICULE DE BREVET EUROPEEN

(11) **EP 3 630 878 B1**
(45) Date de publication et mention de la délivrance du brevet: **17.03.2021**
(21) Numéro de dépôt: 18724583.2
(22) Date de dépôt: 22.05.2018
(51) Int. Cl.: C08G 18/10, C08L 101/00, C09D 175/04, C09J 175/04, C08K 3/26, C08K 5/549

(54) **COMPOSITION DE MASTIC SILYLÉ BAS MODULE**
SILYLIERTE MASTIXZUSAMMENSETZUNG MIT NIEDRIGEM MODUL
LOW MODULUS SILYLATED MASTIC COMPOSITION

(30) Priorité: 23.05.2017 FR 1754554
(43) Date de publication de la demande: 08.04.2020
(73) Titulaire: BOSTIK SA, 92700 Colombes (FR)
(72) Inventeur: SANZ, Federico, 60750 Choisy au Bac (FR); BECQUET, J r my, 77115 Sivry-Courtry (FR)
(74) Mandataire: Arkema Patent
(86) Numéro de dépôt international: PCT/EP2018/063381
(87) Numéro de publication internationale: WO 2018/215463

(56) Documents cités:
- EP-A1- 2 886 575
- WO-A1-2016/174009
- WO-A1-2016/202359
- US-A1- 2010 267 879

## Description

### DOMAINE DE L'INVENTION

La présente invention concerne une composition adaptée pour la préparation de mastic silylé bas module.

La présente invention concerne également l'utilisation d'au moins un silsesquioxane pour préparer une composition de mastic bas module.

### ARRIERE-PLAN TECHNIQUE

Les mastics sont largement utilisés dans le domaine de la construction, notamment pour assembler - par des joints de dilatation - des substrats, par exemple en béton ou en acier, et permettre grâce à leurs propriétés mécaniques, et en particulier élastiques, d'obtenir un joint stable aux variations dimensionnelles induites notamment par les changements de température.

Parmi les propriétés désirables d'un mastic de construction, on peut citer entre autres, sa capacité à adhérer à une variété de substrat, sa résistance aux conditions météorologiques (UV, ozone, eau), son élasticité... La capacité de mouvement est une propriété étroitement liée au module d'élasticité. Le module d'élasticité peut permettre de prédire les propriétés d'extension ou de compression d'un mastic. Le module est typiquement le ratio entre la force (« stress » en anglais) nécessaire pour étirer un mastic (« strain » en anglais) à un certain point, typiquement à 100%. L'élongation est la longueur à laquelle le mastic peut s'allonger, exprimée en un pourcentage de sa taille initiale. Le module a un effet direct sur la capacité d'élongation, car plus la résistance à la traction est faible, plus le mastic peut s'étirer facilement.

Les mastics bas module tendent à avoir une capacité de déformation et de résilience (reprise élastique) importante, lesquels sont capables de s'adapter à des mouvements significatifs sans engendrer une tension trop élevée sur le mastic ou le substrat. Les mastics bas module en particulier sont plus souples, et s'étirent plus facilement encore. Les mastics haut module ont typiquement une capacité de déformation plus faible, et sont plutôt recommandés pour des utilisations avec peu de mouvements attendus où des forces de traction élevées sont requises. Les mastics haut module sont si résistants qu'ils engendrent une forte tension sur les joints adhésifs ou les substrats. Dans le cas de substrats tels que le béton, cette tension peut suffire à endommager les substrats et/ou le joint EP2886575 décrit des compositions adhésives comprenant un silsesquioxane comprenant au moins un groupement phényle et au moins un groupement alcoxy, un polymère silylé comprenant un groupement alkoxysilane et du carbonate de calcium.

Il existe notamment un besoin pour de nouvelles compositions adaptées pour la préparation de mastic bas module, présentant en particulier un bon compromis entre de bonnes propriétés mécaniques, de bonnes propriétés élastiques (élongation et reprise élastique), et de bonnes propriétés d'adhésion de préférence sans utilisation de primaire.

### DESCRIPTION DE L'INVENTION

La présente invention concerne une composition comprenant :
- de 0,68% à 1,00% en poids d'au moins un silsesquioxane (A) comprenant au moins un groupement phényle et au moins un groupement alcoxy ;
- au moins un polymère silylé comprenant au moins un groupement alkoxysilane, de préférence de 3% à 80% d'au moins un polymère silylé comprenant au moins un groupement alkoxysilane; et
- au moins 25% en poids d'au moins une charge carbonatée,
les pourcentages en poids étant exprimés par rapport au poids total de ladite composition.

### Silsesquioxane (A)

Les silsesquioxanes sont typiquement des composés organosiliconés pouvant adopter une structure polyhédrique ou une structure polymérique, avec des liaisons Si-O-Si. Ils ont typiquement la structure générale suivante :

[RSiO_{3/2}]ₜ

dans laquelle R, de nature identique ou différente, représente un radical organique, et t étant un nombre entier pouvant varier de 6 à 12, de préférence t valant 6, 8, 10 ou 12.

Selon un mode de réalisation, le silsesquioxane (A) a une structure polyhédrique (ou POSS pour « Polyhedral Oligomeric Silsesquioxane » en anglais).

De préférence, le silsesquioxane (A) répond à la formule générale (I) suivante : 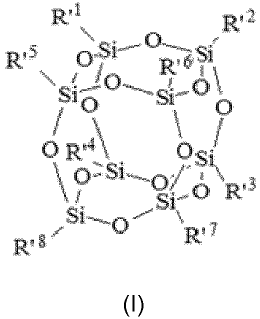 dans laquelle chacun de R'¹ à R'⁸ représente, indépendamment les uns des autres, un groupe choisi parmi :
- un atome d'hydrogène,
- un radical choisi parmi le groupe constitué d'un radical alcoxy linéaire ou ramifié en C₁-C₄, un radical alkyle linéaire ou ramifié comprenant de 1 à 30 atomes de carbone, un radical alcényle comprenant de 2 à 30 atomes de carbone, un radical aromatique comprenant de 6 à 30 atomes de carbone, un radical allyle comprenant de 3 à 30 atomes de carbone, un radical cyclique aliphatique comprenant de 3 à 30 atomes de carbone, un radical acyle comprenant de 1 à 30 atomes de carbone, et
- un groupe -OSiR'⁹R'¹⁰ dans lequel R'⁹ et R'¹⁰ représente chacun, indépendamment l'un de l'autre, un atome d'hydrogène ou un radical choisi dans le groupe constitué des alkyles linéaires ou ramifiés en C₁-C₄, des alcoxys linéaires ou ramifiés en C₁-C₄, des alcényles en C₂-C₄, d'un phényle, d'un radical allyle en C₃-C₆, d'un radical aliphatique cyclique en C₃-C₈, et d'un radical acyle en C₁-C₄ ;
à condition :
- qu'au moins un radical parmi les radicaux R'¹ à R'⁸ soit un radical alcoxy en C₁-C₄; et
- qu'au moins un radical parmi les radicaux R'¹ à R'⁸ soit un radical phényle.

De préférence, dans la formule (I) susmentionnée, chacun de R'¹ à R'⁸ représente, indépendamment les uns des autres, un groupe choisi parmi :
- un atome d'hydrogène,
- un radical choisi parmi le groupe constitué d'un radical alcoxy linéaire ou ramifié en C₁-C₄, un radical alkyle linéaire ou ramifié comprenant de 1 à 30 atomes de carbone, de préférence de 1 à 12 atomes de carbone, préférentiellement de 1 à 8 atomes de carbone, et par exemple de 1 à 5 atomes de carbone, un radical aromatique comprenant de 6 à 30 atomes de carbone, de préférence de 6 à 12 atomes de carbone, et
- un groupe -OSiR'⁹R'¹⁰ dans lequel R'⁹ et R'¹⁰ représente chacun, indépendamment l'un de l'autre, un atome d'hydrogène ou un radical choisi parmi les alkyles linéaires ou ramifiés en C₁-C₄, par exemple le méthyle ou l'éthyle, de préférence le méthyle,
à condition :
- qu'au moins un radical parmi les radicaux R'¹ à R'⁸ soit un radical alcoxy en C₁-C₄; et
- qu'au moins un radical parmi les radicaux R'¹ à R'⁸ soit un radical phényle.

De préférence, dans la formule (I) susmentionnée, R'¹ à R'⁸ représentent chacun, indépendamment les uns des autres, un radical choisi dans le groupe constitué du phényle, du méthyle, et du méthoxy, à condition qu'au moins un radical soit un radical alcoxy en C₁-C₄, et qu'au moins un autre radical soit un radical phényle.

Selon l'invention, le silsesquioxane (A), de préférence de formule (I), peut comprendre de 10% à 20% en poids, de préférence de 12% à 20% en poids, préférentiellement de 15% à 18% en poids de groupement alcoxy, de préférence méthoxy, par rapport au poids total dudit silsesquioxane (A).

Selon un mode de réalisation, le silsesquioxane (A), de préférence de formule (I), comprend au moins un groupement méthyle. De préférence, le silsesquioxane (A) comprend un ratio pondéral groupement(s) phényle : groupement(s) méthyle allant de 1:10 à 10:1, de préférence de 1:5 à 5:1, avantageusement de 1:4 à 4:1, en particulier de 1:2 à 2:1. Par exemple, le ratio pondéral groupement(s) phényle : groupement(s) méthyle est de 1:1 ou de 0,25:1.

Selon un mode de réalisation, le silsesquioxane (A), de préférence de formule (I), a une viscosité à 23°C allant de 10 à 200 mPa.s, de préférence de 14 à 180 mPa.s, avantageusement allant de 90 à 150 mPa.s, préférentiellement de 110 à 130 mPa.s. En particulier, le silsequioxane (A) a une viscosité à 23°C de 14 mPa.s, et de préférence une masse moléculaire moyenne en nombre allant de 800 g/mol à 1 300 g/mol. En particulier, le silsesquioxane (A) a une viscosité à 23°C de 120 mPa.s, et de préférence une masse moléculaire moyenne en nombre allant de 1 000 g/mol à 1 500 g/mol.

De manière générale, la viscosité peut être mesurée de manière bien connue de l'homme du métier. En particulier, la viscosité peut être mesurée avec un viscosimètre Brookfield, en choisissant l'aiguille et la vitesse du module de manière appropriée, en fonction de la gamme de viscosité à mesurer.

Selon un mode de réalisation, le silsesquioxane (A), de préférence de formule (I), a une masse moléculaire moyenne en nombre allant de 500 g/mol à 3 000 g/mol, préférentiellement de 800 g/mol à 2 000 g/mol, et avantageusement de 800 g/mol à 1 500 g/mol. Par exemple, le silsesquioxane (A) a une masse molaire moyenne en poids allant de 800 g/mol à 1 300 g/mol ou de 1 000 à 1 500 g/mol.

Les masses moléculaires moyennes en nombre et en poids des silsesquioxanes peuvent être mesurées par des méthodes bien connues de l'homme du métier, par exemple par chromatographie d'exclusion stérique en utilisant des étalons de type polystyrène.

La composition susmentionnée peut comprend un silsesquioxane (A) ou un mélange de silsesquioxanes (A) de natures différentes.

Selon un mode de réalisation, la teneur en silsesquioxane (A) dans la composition susmentionnée est choisie parmi l'une des teneurs pondérales suivantes : de 0,68% à 1,00%, de 0,69% à 1,00%, de 0,70% à 1,00%, de 0,71% à 1,00%, de 0,72% à 1,00%, de 0,73% à 1,00%, de 0,74% à 1,00%, de 0,75% à 1,00%, de 0,76% à 1,00%, de 0,77% à 1,00%, de 0,78% à 1,00%, de 0,79% à 1,00%, de 0,80% à 1,00%, de 0,81% à 1,00%, de 0,82% à 1,00%, de 0,83% à 1,00%, de 0,84% à 1,00%, de 0,85% à 1,00%, de 0,86% à 1,00%, de 0,87% à 1,00%, de 0,88% à 1,00%, de 0,89% à 1,00%, de 0,90% à 1,00%, de 0,91% à 1,00%, de 0,92% à 1,00%, de 0,93% à 1,00%, de 0,94% à 1,00%, ou de 0,95% à 1,00% en poids, par rapport au poids total de ladite composition.

A titre d'exemple de silsesquixane (A), on peut citer ceux ayant l'un des numéros CAS suivants : [68440-65-3], [68957-04-0], [68957-06-2], [1211908-05-2].

On peut par exemple citer le DC 3074® ou le DC 3037® commercialisés par DOW CORNING.

### Polymère silylé comprenant au moins un groupement alcoxysilane

Selon un mode de réalisation, le polymère silylé comportant au moins un groupement alkoxysilane est un polymère comprenant au moins un, de préférence au moins deux groupements de formule (V) :

-Si(R⁴)ₚ(OR⁵)₃₋ₚ (V)

dans laquelle :
- R⁴ et R⁵, identiques ou différents, représentent chacun un radical alkyl linéaire ou ramifié comprenant de 1 à 4 atomes de carbone;
- p est un nombre entier égal à 0, 1 ou 2.

De préférence, les polymères silylés comportant au moins un groupement alkoxysilane sont choisis parmi les polyuréthanes silylés, les polyéthers silylés, et leurs mélanges.

Le polymère silylé comportant au moins un groupement alkoxysilane peut présenter une masse moléculaire moyenne en nombre allant de 500 à 50 000 g/mol, de préférence encore allant de 700 à 20 000 g/mol.

La masse moléculaire moyenne en nombre des polymères peut être mesurée par des méthodes bien connues de l'homme du métier, par exemple par chromatographie d'exclusion stérique en utilisant des étalons de type polyéthylène glycol.

Selon un mode de réalisation, le polymère silylé comportant au moins un groupement alkoxysilane est choisi parmi les polymères de formules (II), (III) ou (IV) telles que définies ci-dessous, et leurs mélanges :

(R⁵O)₃₋ₚ(R4)ₚSi-R⁰-[OR²]ₙ-R⁰-Si(R⁴)p(OR⁵)₃₋ₚ (II)

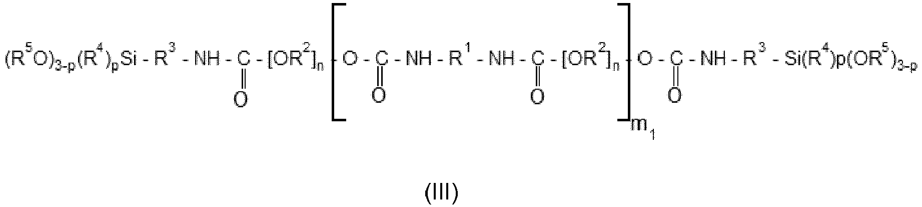

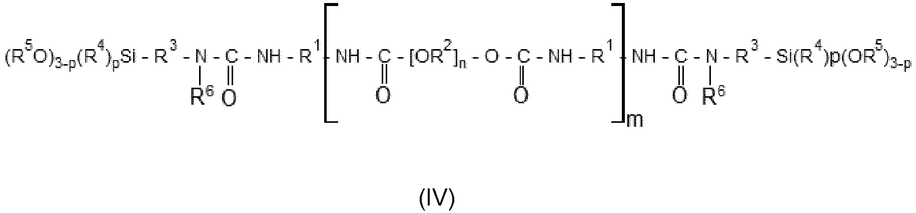

dans lesquelles :
- R¹ représente un radical divalent hydrocarboné comprenant de 5 à 15 atomes de carbone qui peut être aromatique ou aliphatique, linéaire, ramifié ou cyclique,
- R⁰ représente un radical divalent alkylène linéaire ou ramifié comprenant de 3 à 6 atomes de carbone,
- R³ représente un radical divalent alkylène linéaire ou ramifié comprenant de 1 à 6 atomes de carbone, de préférence R³ représentant méthylène ou n-propylène,
- R² représente un radical divalent alkylène linéaire ou ramifié comprenant de 2 à 4 atomes de carbone,
- R⁴ et R⁵, identiques ou différents, représentent chacun un radical alkyle linéaire ou ramifié comprenant de 1 à 4 atomes de carbone, de préférence R⁴ et R⁵ représentant méthyle,
- R⁶ représente un atome d'hydrogène, un radical phényle, un radical alkyle linéaire, ramifié ou cyclique comprenant de 1 à 6 atomes de carbone, ou un radical 2-succinate de formule : 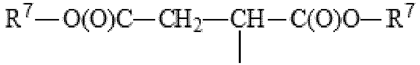 dans laquelle R⁷ est un radical alkyle linéaire ou ramifié comprenant de 1 à 6 atomes de carbone,
- n est un nombre entier tel que la masse moléculaire moyenne en nombre du bloc polyéther de formule -[OR²]ₙ- va de 300 g/mol à 40 000 g/mol dans les polymères de formules (II), (III) et (IV),
- m₁ est zéro ou un nombre entier,
- n et m₁ sont tels que la masse moléculaire moyenne en nombre du polymère de formule (III) va de 500 g/mol à 50 000 g/mol, de préférence de 700 g/mol à 20 000 g/mol,
- m est un nombre entier différent de zéro,
- n et m sont tels que la masse moléculaire moyenne en nombre du polymère de formule (IV) va de 500 g/mol à 50 000 g/mol, de préférence de 700 g/mol à 20 000 g/mol,
- p est un nombre entier égal à 0, 1 ou 2, p étant de préférence 0 ou 1.

De préférence, le radical R¹ des formules (II), (III) et (IV) est choisi parmi l'un des radicaux divalents suivants dont les formules ci-dessous font apparaître les 2 valences libres :
- a) le radical divalent dérivé de l'isophorone diisocyanate (IPDI) : 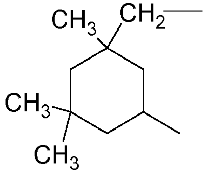
- b) le radical divalent dérivé des 4,4'- et 2,4'-dicyclohexylméthane diisocyanate (HMDI) : 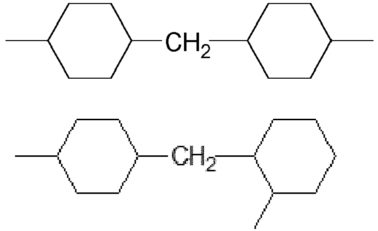 ou
- c) le radical dérivé des 2,4- et 2,6-toluène diisocyanate (TDI) 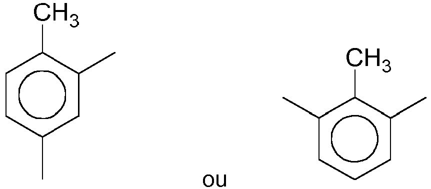
- d) le radical dérivé des 4,4'- et 2,4'-diphénylméthane diisocyanate (MDI) 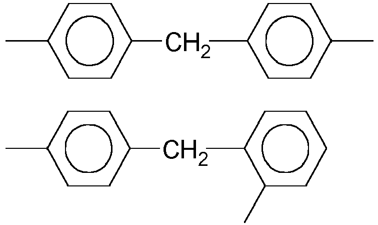 ou
- e) le radical dérivé du m-xylylène diisocyanate (m-XDI) 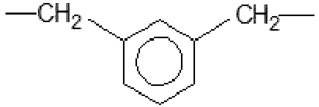
- f) le radical dérivé de l'hexamethylène diisocyanate (HDI)

   -(CH₂)₆-

De préférence, le radical R¹ des formules (II), (III) et (IV) est le radical divalent dérivé de l'isophorone diisocyanate ou du xylylène diisocyanate.

Les polymères de formule (III) peuvent être obtenus selon un procédé décrit dans les documents EP 2336208 et WO 2009/106699.

Parmi les polymères répondant à la formule (III), on peut par exemple citer :
- GENIOSIL® STP-E10 (disponible auprès de Wacker) : polyéther comprenant deux groupements (V) de type diméthoxy (m₁ égal à 0, p égal à 1 et R⁴ et R⁵ représentent un groupement méthyle) présentant une masse moléculaire moyenne en nombre d'environ 8 889 g/mol où R³ représente un groupement méthylène;
- GENIOSIL® STP-E30 (disponible auprès de Wacker) : polyéther comprenant deux groupements de formule (V) de type diméthoxy (m₁ égal à 0, p égal à 1 et R⁴ et R⁵ représentent un groupement méthyle) présentant une masse moléculaire moyenne en nombre d'environ 14 493 g/mol où R³ représente un groupement méthylène;
- SPUR+® 1050MM (disponible auprès de MOMENTIVE) : polyuréthane comprenant deux groupements de formule (V) de type triméthoxy (m₁ différent de 0, p égal à 0 et R⁵ représente un groupement méthyle) présentant une masse moléculaire moyenne en nombre d'environ 21 000 g/mol où R³ représente un groupement n-propylène ;
- SPUR+® Y-19116 (disponible auprès de MOMENTIVE) : polyuréthane comprenant deux groupements de formule (V) de type triméthoxy (m₁ différent de 0 et R⁵ représente un groupement méthyle) présentant une masse moléculaire moyenne en nombre allant de 15 000 à 17 000 g/mol où R³ représente un groupement n-propylène ;
- DESMOSEAL® S XP 2636 (disponible auprès de BAYER) : polyuréthane comprenant deux groupements de formule (V) de type triméthoxy (m₁ différent de 0, p égal à 0 et R⁵ représente un groupement méthyle) présentant une masse moléculaire moyenne en nombre d'environ 15 038 g/mol où R³ représente un groupement n-propylène.

A titre d'exemple de polymère silylé de formule (III), on peut également citer le GENIOSIL® XB502, produit commercial disponible auprès de WACKER. Ce produit GENIOSIL® XB502 comprend un mélange de deux produits (B) et (C) où
(B) est un polymère de formule (III) de masse moléculaire moyenne en nombre d'environ 14 000 g/mol où m₁ est égal à zéro, p est égal à 1, R⁵ et R⁴ représentent chacun un groupement méthyle, R³ représente un groupement méthylène, et le groupement -[OR²]ₙ- provient d'un polypropylène glycol ;
(C) est un silsesquioxane (A) de masse moléculaire moyenne en nombre d'environ 800 g/mol terminé par des groupements méthoxy (CAS 1211908-05-2),
les produits (B) et (C) étant présents dans un ratio massique (B)/(C) d'environ (25-30)/(70-75).

Les polymères de formule (II) peuvent être obtenus par hydrosilylation de polyéther diallyléther selon un procédé décrit par exemple dans le document EP 1829928.

Parmi les polymères répondant à la formule (II), on peut citer :
- le MS POLYMER™ S303H (disponible auprès de KANEKA) correspondant à un polyéther comprenant deux groupements de formule (V) de type diméthoxy (p est égal à 1 et R⁴ représente un groupement méthyle) ayant une masse moléculaire moyenne en nombre d'environ 22 000 g/mol et une viscosité de 12,5 Pa.s à 23°C ;
- le MS POLYMER™ S227 (disponible auprès de KANEKA) correspondant à un polyéther comprenant deux groupements de formule (V) de type diméthoxy (p est égal à 1, R⁵ et R⁴ représentent chacun un groupement méthyle) ayant une masse moléculaire moyenne en nombre d'environ 27 000 g/mol, et une viscosité de 34 Pa.s à 23°C.

Les polymères de formule (IV) peuvent être obtenus selon le procédé suivant :
a) réaction d'un polyéther polyol de formule suivante :

   HO⁅OR²]ₙ-OH

   avec une excès stoechiométrique de diisocyanate de formule suivante: NCO-R¹-NCO pour former un bloc polyuréthane-polyéther ayant au moins deux groupes terminaux -NCO, ledit bloc comprenant de préférence de 1,5% à 1,9% en poids de groupement - NCO, et puis
b) réaction entre un bloc obtenu à l'étape précédente avec une quantité stoechiométrique ou un léger excès d'une α-, β- ou γ-aminosilane ayant la formule suivante :

   (R⁵O)₃₋ₚ(R⁴)ₚSi-R³-NHR⁶

Un tel procédé est par exemple décrit dans WO 2013/136108.

Parmi les polymères répondant à la formule (IV), on peut citer :
- le SPUR+ 1050 MM (disponible auprès de MOMENTIVE) correspondant à polyuréthane polyéther comprenant deux groupements de formule (V) de type triméthoxy (p est égal à 0, R⁵ représente un groupement méthyle) ayant une masse moléculaire en nombre d'environ 20 000 g/mol et une viscosité de 35 Pa à 23°C ;
- le SPUR+ 1015 LM (disponible auprès de MOMENTIVE) correspondant à un polyuréthane polyéther comprenant deux groupements de formule (V) de type triméthoxy (p est égal à 0, R⁵ représente un groupement méthyle) ayant une masse moléculaire en nombre d'environ 25 000 g/mol et une viscosité de 50 Pa à 23°C.

La composition selon l'invention peut comprendre un polymère de formule (II) susmentionnée ou un mélange de polymères différents de formule (II) susmentionnée.

La composition selon l'invention peut comprendre un polymère de formule (III) susmentionné ou un mélange de polymères différents de formule (III) susmentionnée.

La composition selon l'invention peut comprendre un polymère de formule (IV) susmentionnée ou un mélange de polymères différents de formule (IV) susmentionnée.

La composition selon l'invention peut comprendre :
- au moins un polymère de formule (II) susmentionnée, et au moins un polymère de formule (III) susmentionnée;
- au moins un polymère de formule (II) susmentionnée, et au moins un polymère de formule (IV) susmentionnée;
- au moins un polymère de formule (III) susmentionnée, et au moins un polymère de formule (IV) susmentionnée; ou
- au moins un polymère de formule (II) susmentionnée, au moins un polymère de formule (III) susmentionnée, et au moins un polymère de formule (IV) susmentionnée.

Selon un mode de réalisation, la composition susmentionnée comprend au moins un polymère de formule (II) susmentionnée, et au moins un polymère de formule (III) susmentionnée dans un rapport en poids polymère(s) de formule (II)/polymère(s) de formule (III) compris entre 1/10 et 10/1, de préférence entre 1/5 et 5/1, préférentiellement entre 2/5 et 5/2, avantageusement entre 2/5 et 3/5.

Selon un mode de réalisation, la composition selon l'invention comprend :
- au moins un polymère silylé de formule (II), dans laquelle :
   - p = 0 ou 1, de préférence p = 1,
   - R⁰ représente un radical divalent n-propylène,
   - R⁴ et R⁵ représente chacun un groupement méthyle,
   - la masse moléculaire moyenne en nombre dudit polymère allant de 5 000 à 30 000 g/mol, de préférence de 10 000 à 20 000 g/mol.
      et/ou
- au moins un polymère silylé de formule (III), dans laquelle :
   - m₁ est un nombre entier égal ou différent de 0,
   - p = 0 ou 1, de préférence p = 0,
   - R⁴ et R⁵ représentent chacun un radical méthyle,
   - R³ représente un radical divalent méthylène ou n-propylène,
   - la masse moléculaire moyenne en nombre dudit polymère allant de 5 000 à 30 000 g/mol, préférentiellement de 10 000 à 20 000 g/mol, en particulier de 14 000 à 16 000 g/mol,

Selon un mode de réalisation, la composition selon l'invention comprend :
- au moins un polymère silylé de formule (III), dans laquelle :
   - m₁ est un nombre entier égal ou différent de 0,
   - p = 0,
   - R⁴ et R⁵ représentent chacun un radical méthyle,
   - R³ représente un radical divalent n-propylène,
   - la masse moléculaire moyenne en nombre dudit polymère allant de 5 000 à 30 000 g/mol, préférentiellement de 10 000 à 20 000 g/mol, en particulier de 14 000 à 16 000 g/mol,
      et/ou
- au moins un polymère silylé de formule (III), dans laquelle :
   - m₁ est un nombre entier égal à 0,
   - p = 1,
   - R⁴ et R⁵ représentent chacun un radical méthyle,
   - R³ représente un radical divalent méthylène,
   - la masse moléculaire moyenne en nombre dudit polymère allant de 5 000 à 30 000 g/mol, préférentiellement de 10 000 à 20 000 g/mol, en particulier d'environ 14 000 g/mol,
      et/ou
- au moins un polymère silylé de formule (II), dans laquelle :
   - p = 0 ou 1, de préférence p = 1,
   - R⁰ représente un radical divalent n-propylène,
   - R⁴ et R⁵ représente chacun un groupement méthyle,
   - la masse moléculaire moyenne en nombre dudit polymère allant de 5 000 à 30 000 g/mol, de préférence de 10 000 à 20 000 g/mol.

Selon un mode de réalisation, la composition selon l'invention comprend de 3% à 80% en poids, de préférence de 5% à 60% en poids, préférentiellement de 5% à 50% en poids, avantageusement de 10% à 50%, par exemple de 10% à 40% en poids, avantageusement de 20% à 30%, en particulier de 22% à 24% en poids d'au moins un polymère silylé comprenant au moins un groupement alkoxysilane, de préférence choisi parmi les polymères de formules (II), (III), (IV) susmentionnées et leurs mélanges, par rapport au poids total de ladite composition.

### Charge carbonatée

Selon un mode de réalisation, la charge carbonatée est choisie parmi les carbonates de métaux alcalin ou alcalino-terreux et leurs mélanges, de préférence la charge carbonatée est le carbonate de calcium.

Le carbonate de calcium peut être rendu hydrophobe, par exemple avec du stéarate de calcium ou un analogue permettant de conférer une hydrophobie partielle ou totale aux particules de carbonate de calcium. Le caractère plus ou moins hydrophobe du carbonate de calcium peut avoir un impact sur la rhéologie de la composition. De plus, le revêtement hydrophobe peut permettre d'empêcher que le carbonate de calcium n'absorbe les constituants de la composition et ne les rende inefficaces. Le revêtement hydrophobe du carbonate de calcium peut représenter de 0,1% à 3,5% en poids, par rapport au poids total de carbonate de calcium.

Le carbonate de calcium qui peut être utilisé dans la présente invention a de préférence une granulométrie allant de 0,1 à 400 µm, de préférence encore de 1 à 400 µm, préférentiellement de 10 à 350 µm, de préférence encore de 50 à 300 µm.

A titre d'exemple de carbonate de calcium, on peut citer le MIKHART® 1T (disponible auprès de la société LA PROVENCALE).

La composition selon l'invention peut comprendre au moins 25% en poids d'au moins une charge carbonatée, de préférence au moins 30% en poids, préférentiellement au moins 40% en poids par rapport au poids total de la composition.

La composition selon l'invention comprend de préférence de 25% à 80% en poids, préférentiellement de 40% à 60% en poids, en particulier de 45% à 55% en poids d'au moins une charge carbonatée, par exemple de carbonate de calcium, par rapport au poids total de la composition.

### Composition

La composition selon l'invention peut comprendre au moins un catalyseur. De préférence, la composition comprend au moins un catalyseur.

Le catalyseur peut être tout catalyseur connu par l'homme du métier pour la condensation de silanol. On peut citer comme exemples de tels catalyseurs :
- les aminosilanes comme le N-(2-aminoéthyl)-3-aminopropyltriméthoxysilane (commercialement disponible sous la dénomination SILQUEST® A-1120 auprès de la société MOMENTIVE) ou le 3-aminopropyltriméthoxysilane,
- des dérivés organiques du titane comme l'acétyl acétonate de titane (disponible commercialement sous la dénomination TYZOR® AA75 auprès de la société DU PONT DE NEMOURS),
- de l'aluminium comme le chélate d'aluminium (disponible commercialement sous la dénomination K-KAT® 5218 auprès de la société KING INDUSTRIES),
- des amines comme le 1,8-diazabicyclo[5.4.0]undéc-7-ène (DBU) ou le 1,5-diazabicyclo[4.3.0]non-5-ène (DBN), l'éther diéthylique-2,2'-morpholine (DMDEE), le 1,4-diazabicylo[2.2.2]octane (DABCO),
- les catalyseurs à base d'étain comme par exemple le NEOSTANN® S-1 ou TIB-KAT® 216 (disponible respectivement auprès de KANEKA ou TIB CHEMICALS). Ces catalyseurs à base d'étain conviennent particulièrement pour les polymères silylés de formule (II).

Le ou les catalyseurs représentent de préférence de 0,1% à 1% en poids, préférentiellement de 0,1% à 0,6% en poids, avantageusement de 0,3% à 0,6% en poids du poids total de la composition.

Selon un mode de réalisation, la composition comprend en outre au moins un additif choisi parmi les plastifiants, les solvants, les pigments, les promoteurs d'adhérence, les absorbeurs d'humidité, les stabilisants UV (ou anti-oxydants), les paillettes, les matériaux fluorescents, les additifs rhéologiques, les charges autres que les charges carbonatées, et leurs mélanges.

Selon un mode de réalisation, la composition selon l'invention comprend :
- de 3% à 80% en poids, de préférence de 5% à 50% en poids, préférentiellement de 10% à 50% en poids, avantageusement de 10% à 40% en poids d'au moins un polymère silylé comportant au moins un groupement alkoxysilane tel que défini ci-dessus,
- de 0,1% à 1% en poids, de préférence de 0,1% à 0,6% en poids, d'au moins un catalyseur tel que défini ci-dessus,
- de 25% à 80% en poids, de préférence de 40% à 60% en poids, d'au moins une charge carbonatée, de préférence de carbonate de calcium,
- de 0% à 30% en poids, en particulier de 0,1% à 30% en poids, de préférence de 0,5% à 20% en poids, préférentiellement de 0,5% à 15% en poids d'au moins un additif choisi parmi les plastifiants, les solvants, les pigments, les promoteurs d'adhérence, les absorbeurs d'humidité, les stabilisants UV (ou anti-oxydants), les paillettes, les matériaux fluorescents, les additifs rhéologiques, les charges autres que les charges carbonatées, et leurs mélanges ; et
- de 0,68% à 1,00% en poids, de préférence de 0,69% à 1,00% en poids, préférentiellement de 0,75% à 1,00% en poids, et avantageusement de 0,80% à 1,00% en poids d'au moins un silsesquioxane (A) comprenant au moins un groupement phényle et au moins un groupement alcoxy tel que défini ci-dessus, les pourcentages en poids étant exprimés par rapport au poids total de la composition.

Dans le cadre de l'invention, on entend par « charge autre que la charge carbonatée » ou encore « charge », une charge qui n'est pas une charge carbonatée.

La charge peut être choisie parmi les charges organiques, les charges inorganiques et leurs mélanges.

A titre de charge(s) organique(s), on peut utiliser n'importe quelle(s) charge(s) organique(s) et notamment polymérique(s) typiquement utilisée(s) dans le domaine des compositions de mastic.

On peut utiliser par exemple du polychlorure de vinyle (PVC), des polyoléfines, du caoutchouc, de l'éthylène vinyl acétate (EVA), des fibres aramides telles que le Kevlar®.

On peut utiliser également des microsphères creuses en polymère thermoplastique expansibles ou non expansibles. On peut notamment citer des microsphères creuses en chlorure de vinylidène/acrylonitrile.

La taille moyenne de particule de la (des) charge(s) utilisable(s) est de préférence inférieure ou égale à 10 microns, plus préférentiellement inférieure ou égale à 3 microns, afin d'éviter leur sédimentation dans la composition selon l'invention au cours de son stockage.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

De préférence, la charge est une charge inorganique.

Les charges inorganiques peuvent se présenter sous la forme de particules de géométrie diverse. Elles peuvent être par exemple sphériques, fibreuses, ou présenter une forme irrégulière.

Selon un mode de réalisation, la charge est choisie parmi le sable, les billes de verre, le verre, le quartz, la barite, l'alumine, le mica, le talc. De préférence, la charge est choisie parmi le sable et les billes de verre.

Le sable qui peut être utilisé dans la présente invention a de préférence une granulométrie allant de 0,1 à 400 µm, préférentiellement de 1 à 400 µm, de préférence encore de 10 à 350 µm, de préférence encore de 50 à 300 µm.

Les billes de verre qui peuvent être utilisées dans la présente invention ont de préférence une granulométrie allant de 0,1 à 400 µm, préférentiellement de 1 à 400 µm, de préférence encore de 10 à 350 µm, de préférence encore de 50 à 300 µm.

La ou les charges (autre(s) que la(les) charge(s) carbonatée(s)) représente(nt) de préférence de 0% à 30% en poids, de préférence de 0% à 10%, préférentiellement de 1% à 10% en poids, du poids total de la composition.

La composition selon l'invention peut comprendre au moins un agent plastifiant à raison de 5% à 30% en poids, de préférence de 10% à 30% en poids, préférentiellement de 15% à 25% en poids par rapport au poids total de ladite composition.

A titre d'exemple d'agent plastifiant utilisable, on peut utiliser n'importe quel agent plastifiant habituellement utilisé dans le domaine des compositions de mastic.

De préférence, on utilise :
- le diisodecyl phtalate, tel que commercialisé sous le nom PALATINOL™ DIDP par la Société BASF,
- un ester d'acide alkylsulphonique et de phénol, tel que commercialisé sous le nom MESAMOLL® par la société LANXESS,
- le diisononyl-1,2-cyclohexanedicarboxylate, tel que commercialisé sous le nom HEXAMOLL DINCH® par la société BASF,
- le tétravalérate de pentaérythritol, tel que commercialisé sous le nom PEVALEN™ par la Société PERSTORP.

La composition selon l'invention peut comprendre au moins un agent de rhéologie.

A titre d'exemple d'agent(s) de rhéologie utilisable(s), on peut citer n'importe quel agent de rhéologie habituellement utilisé dans le domaine des compositions de mastic.

De préférence, on utilise un ou plusieurs agents de rhéologie choisis parmi les agents thixotropiques, et plus préférentiellement parmi:
- les plastisols de PVC, correspondant à une suspension de PVC dans un agent plastifiant miscible avec le PVC, obtenue in situ par chauffage à des températures allant de 60°C à 80°C. Ces plastisols peuvent être ceux décrits notamment dans l'ouvrage « Polyurethane Sealants », Robert M. Evans, ISBN 087762-998-6,
- la silice pyrogénée,
- des dérivés d'urée issus de la réaction d'un monomère diisocyanate aromatique tel que le 4,4'-MDI avec une amine aliphatique telle que la butylamine. La préparation de tels dérivés d'urée est décrite notamment dans la demande FR 1 591 172.
- les cires d'amides micronisées, tel que le CRAYVALLAC SLX commercialisé par Arkema.

La teneur totale en agent(s) de rhéologie(s) pouvant être utilisée peut varier de 1% à 30% en poids, de préférence de 5% à 30 % en poids, plus préférentiellement de 10% à 25% en poids par rapport au poids total de la composition selon l'invention.

Le solvant est de préférence un solvant volatil à température ambiante (température de l'ordre de 23°C). Le solvant volatil peut par exemple être choisi parmi les alcools volatils à température ambiante, tel que l'éthanol ou l'isopropanol. Le solvant volatil permet par exemple de diminuer la viscosité de la composition et de rendre la composition plus facile à appliquer. Le caractère volatil du solvant permet au joint, obtenu après durcissement de la composition, de ne plus contenir de solvant. Ainsi, le solvant n'a par exemple pas d'influence négative sur la dureté du joint.

Lorsqu'un solvant, en particulier un solvant volatil, est présent dans la composition, sa teneur est de préférence inférieure ou égale à 5% en poids, de préférence encore inférieure ou égale à 3% en poids, par rapport au poids total de la composition.

De préférence, la teneur en solvant(s) dans la composition est comprise entre 0% et 5% en poids.

Lorsqu'un pigment est présent dans la composition, sa teneur est de préférence inférieure ou égale à 3% en poids, de préférence encore inférieure ou égale à 2% en poids, par rapport au poids total de la composition. Lorsqu'il est présent, le pigment peut par exemple représenter de 0,1% à 3% en poids ou de 0,4% à 2% en poids du poids total de la composition.

Les pigments peuvent être des pigments organiques ou inorganiques.

Par exemple, le pigment est TiO₂, en particulier le KRONOS® 2059 commercialisé par la société KRONOS.

L'absorbeur d'humidité, s'il est présent, peut être choisi parmi le vinyltriméthoxysilane (VTMO), le vinyltriéthoxysilane (VTEO), les alkoxyarylsilanes, tel que le GENIOSIL® XL 70 disponible auprès de la Société WACKER.

Lorsqu'un absorbeur d'humidité est présent dans la composition, sa teneur est de préférence inférieure ou égale à 3% en poids, de préférence encore inférieure ou égale à 2% en poids par rapport au poids total de la composition. Lorsqu'il est présent, l'absorbeur d'humidité peut par exemple représenter de 0,5% à 3% en poids ou de 1% à 2% en poids par rapport au poids total de la composition.

Parmi les stabilisants UV ou anti-oxydants, on peut citer les benzotriazoles, les benzophénones, les amines dites encombrées telles que le bis(2,2,6,6,-tétraméthyl-4-piperidyl)sébacéate, et leurs mélanges.

On peut par exemple citer les produits TINUVIN® 328 ou TINUVIN™ 770 commercialisés par BASF.

Selon un mode de réalisation, la composition selon l'invention comprend :
- de 15% à 80% en poids, préférentiellement de 15% à 50% en poids d'au moins un polymère silylé comportant au moins un groupement alkoxysilane tel que défini ci-dessus,
- de 0,1% à 1% en poids, de préférence de 0,1% à 0,6% en poids, d'au moins un catalyseur tel que défini ci-dessus,
- de 25% à 55% en poids, de préférence de 40% à 55% en poids, d'au moins une charge carbonatée telle que définie ci-dessus,
- de 10% à 30% en poids d'au moins un plastifiant tel que défini ci-dessus,
- de 0,1% à 3% en poids d'au moins un absorbeur d'humidité tel que défini ci-dessus,
- de 0,1% à 10% en poids d'au moins une charge autre que la(les) charge(s) carbonaté(es) telle(s) que définie(s) ci-dessus;
- de 0,1% à 20% en poids, de préférence de 0,1% à 10% en poids d'au moins un additif choisi parmi les solvants, les pigments, les promoteurs d'adhérence, les stabilisants UV (ou anti-oxydants), les paillettes, les matériaux fluorescents, les additifs rhéologiques, et leurs mélanges ;
- de 0,68% à 1,00% en poids, de préférence de 0,69% à 1,00% en poids, préférentiellement de 0,75% à 1,00% en poids, et avantageusement de 0,80% à 1,00% en poids d'au moins un silsesquioxane (A) comprenant au moins un groupement phényle et au moins un groupement alcoxy, tel que défini ci-dessus.

De préférence, la composition selon l'invention comprend (de préférence est constituée de):
- de 15% à 80% en poids, préférentiellement de 15% à 50%, avantageusement de 10% à 40% en poids :
   ∘ d'au moins un polymère silylé de formule (III), dans laquelle :
      - m₁ est un nombre entier égal ou différent de 0,
      - p = 0 ou 1, de préférence p = 0,
      - R⁴ et R⁵ représentent chacun un radical méthyle,
      - R³ représente un radical divalent méthylène ou n-propylène,
      - la masse moléculaire moyenne en nombre dudit polymère allant de 5 000 à 30 000 g/mol, préférentiellement de 10 000 à 20 000 g/mol, en particulier de 14 000 à 16 000 g/mol,
         et/ou
   ∘ d'au moins un polymère silylé de formule (II), dans laquelle :
      - p = 0 ou 1, de préférence p = 1,
      - R⁰ représente un radical divalent n-propylène,
      - R⁴ et R⁵ représente chacun un groupement méthyle,
      - la masse moléculaire moyenne en nombre dudit polymère allant de 5 000 à 30 000 g/mol, de préférence de 10 000 à 20 000 g/mol.
- de 0,1% à 1% en poids, de préférence de 0,1% à 0,6% en poids, d'au moins un catalyseur tel que défini ci-dessus,
- de 25% à 55% en poids, de préférence de 40% à 55% en poids de carbonate de calcium,
- de 10% à 30% en poids d'au moins un plastifiant tel que défini ci-dessus,
- de 0,1% à 3% en poids d'au moins un absorbeur d'humidité tel que défini ci-dessus,
- de 0,1% à 10% en poids d'au moins une charge autre que la(les) charge(s) carbonaté(es) telle(s) que définie(s) ci-dessus;
- de 0,1% à 20% en poids, de préférence de 0,1% à 10% en poids d'au moins un additif choisi parmi les solvants, les pigments, les promoteurs d'adhérence, les stabilisants UV (ou anti-oxydants), les paillettes, les matériaux fluorescents, les additifs rhéologiques, et leurs mélanges ;
- de 0,68% à 1,00% en poids, de préférence de 0,69% à 1,00% en poids, préférentiellement de 0,75% à 1,00% en poids, et avantageusement de 0,80% à 1,00% en poids d'au moins un silsesquioxane (A) comprenant au moins un groupement phényle et au moins un groupement alcoxy, tel que défini ci-dessus, ledit silsquioxane (A) répondant de préférence au composé de formule (I).

Selon un mode de réalisation, la composition comprend de 2 à 5, de préférence de 3 à 4,5, et préférentiellement de 3 à 4,4 parties en poids de silsesquioxane (A) tel que défini ci-dessus, pour 100 parties en poids de polymère(s) silylé(s) tel que défini ci-dessus.

De préférence, la composition comprend :
- 100 parties en poids d'au moins un polymère silylé comprenant au moins un groupement alkoxysilane tel que défini ci-dessus ;
- de 2 à 5, de préférence de 3 à 4,5, et préférentiellement de 3 à 4,4 parties en poids de silsesquioxane (A) tel que défini ci-dessus, ;
- de 100 à 300, de préférence de 200 à 250 parties en poids d'au moins une charge carbonatée.

De préférence, la composition comprend :
- 100 parties en poids d'au moins un polymère silylé comprenant au moins un groupement alkoxysilane tel que défini ci-dessus ;
- de 2 à 5, de préférence de 3 à 4,5, et préférentiellement de 3 à 4,4 parties en poids de silsesquioxane (A) tel que défini ci-dessus,
- de 100 à 300 parties en poids d'au moins une charge carbonatée telle que définie ci-dessus,
- de 0,6 à 1,2, de préférence de 0,5 à 1,0 parties en poids d'au moins un catalyseur tel que défini ci-dessus,
- de 0,6 à 100, en particulier de 1 à 50, de préférence de 1,5 à 40 parties en poids d'au moins un additif choisi parmi les plastifiants, les solvants, les pigments, les promoteurs d'adhérence, les absorbeurs d'humidité, les stabilisants UV (ou anti-oxydants), les paillettes, les matériaux fluorescents, les additifs rhéologiques, les charges autres que les charges carbonatées, et leurs mélanges.

Selon un mode de réalisation, la composition comprend de 0,7 à 1,00 parties en poids de silsesquioxane (A) tel que défini ci-dessus, pour 100 parties en poids de la somme des autres constituants de ladite composition, la somme des autres constituants étant de préférence répartie de la manière suivante :
- de 15 à 80 parties en poids, préférentiellement de 15 à 50 parties en poids d'au moins un polymère silylé comportant au moins un groupement alkoxysilane tel que défini ci-dessus,
- de 0,01 à 1 parties en poids, de préférence de 0,01 à 0,5 parties en poids, d'au moins un catalyseur tel que défini ci-dessus,
- de 25 à 55 parties en poids, de préférence de 40 à 55 parties en poids, d'au moins une charge carbonatée telle que définie ci-dessus,
- de 10 à 30 parties en poids d'au moins un plastifiant tel que défini ci-dessus,
- de 0,1 à 3 parties en poids d'au moins un absorbeur d'humidité tel que défini ci-dessus,
- de 0,1 à 10 parties en poids d'au moins une charge autre que la(les) charge(s) carbonaté(es) telle(s) que définie(s) ci-dessus;
- de 0,1 à 20 parties en poids, de préférence de 0,1 à 10 parties en poids d'au moins un additif choisi parmi les solvants, les pigments, les promoteurs d'adhérence, les stabilisants UV (ou anti-oxydants), les paillettes, les matériaux fluorescents, les additifs rhéologiques, et leurs mélanges.

Selon un mode de réalisation, la composition susmentionnée est telle que le rapport en poids polymère(s) silylé(s)/silsesquioxane (A) est compris entre 33 et 22, de préférence entre 32,9 et 22,5, préférentiellement entre 32,85 et 22,97.

La composition selon l'invention peut être sous forme mono-composante, c'est-à-dire que tous les composants sont conditionnés dans un même compartiment.

La composition est de préférence prête à l'emploi c'est-à-dire que l'utilisateur (particulier ou professionnel) peut appliquer directement la composition pour réaliser le joint, sans avoir à effectuer de mélange préalable.

La composition peut être préparée par mélange du ou des polymères silylés, et de(s) charge(s) (carbonatée et autres charges) à une température allant de 5°C à 80°C, de préférence sous atmosphère inerte. Le ou les catalyseurs peuvent être ajoutés en même temps, ou dans une second étape après mélange du(des) polymère(s) et de(s) la charge(s). Le silsequioxane (A) peut également être ajouté en même temps, ou dans une second étape après mélange du(des) polymère(s) et de(s) la charge(s). Les autres additifs sont introduits dans la composition conformément aux usages habituels.

Les compositions selon l'invention comprennent un polymère silylé réticulable à l'humidité dont la structure chimique est dotée de groupes réactifs terminaux de type alkoxysilane, ainsi qu'un silsequioxane (A) comprenant des groupes réactifs. La réaction de l'ensemble de ces groupes réactifs avec l'eau provenant de l'humidité de l'air ou du substrat (dénommée réaction de réticulation) permet notamment, après l'introduction du mastic dans l'interstice entre les 2 substrats à assembler, la création d'un réseau polymérique tridimensionnel solide, qui confère au joint adhésif ainsi créé les propriétés mécaniques souhaitées. L'obtention effective de ces propriétés mécaniques est atteinte lorsque la totalité de la quantité de mastic introduite est réticulée, ce qui peut nécessiter plusieurs jours.

Cette réaction, dite de réticulation, conduit après son achèvement à la formation d'un joint adhésif entre les 2 substrats qui est constitué par le polymère et le silsequioxane (A) réticulés en un réseau tridimensionnel formé par les chaînes polymériques reliées entre elles par des liaisons de type siloxane. Ce joint assure notamment la solidité de l'assemblage des 2 substrats ainsi obtenu.

La composition selon l'invention est avantageusement une composition de mastic, en particulier une composition de mastic élastique.

La composition selon l'invention présente avantageusement les caractéristiques suivantes après réticulation:
- un module à 100% d'élongation inférieur ou égal à 0,40 MPa ; et
- une reprise élastique supérieure ou égale à 70%,

Ces caractéristiques sont typiques des compositions de mastic bas module. Ainsi, la composition selon l'invention est avantageusement une composition de mastic bas module, c'est-à-dire qu'elle conduit à un mastic bas module après réticulation.

Selon l'invention le module à 100% d'élongation est le module à 100% d'élongation à 23°C. Il s'agit notamment du module à 100% d'élongation pour un substrat béton.

Dans le cadre de l'invention, le « module à 100% d'élongation » est défini comme la contrainte à 100% d'élongation. Il permet typiquement de mesurer les forces qui se développent dans le mastic lorsqu'il est étiré.

Dans le cadre de l'invention, la « reprise élastique» est définie comme l'aptitude d'un matériau à reprendre sa forme initiale après élongation. Elle est notamment exprimée en % par rapport à sa longueur initiale représentant 100%.

Lorsque l'on enlève la charge qui a provoqué l'allongement, l'éprouvette de mastic peut revenir plus ou moins complètement à sa longueur d'origine. Un bon mastic élastomère doit de préférence revenir le plus possible à sa longueur d'origine, de façon à supporter de nombreux cycles traction/compression qui se produisent pendant sa durée de vie.

La composition de mastic selon l'invention est avantageusement classée 25LM selon la norme ISO11600 de 2002. Suivant cette norme, la classification 25LM nécessite notamment :
- un module à 100% d'élongation inférieur ou égal à 0,40 MPa ; et
- une reprise élastique supérieure ou égale à 70%.

Dans le cadre de la présente invention, le « module à 100% d'élongation » est déterminé selon le test figurant dans la norme ISO11600 de 2002, qui renvoi à la norme ISO8339 de 2005.

Dans le cadre de la présente invention, la « reprise élastique » est déterminée selon le test figurant dans la norme ISO11600 de 2002, qui renvoi à la norme ISO7389 de 2002.

La composition selon l'invention est avantageusement une composition de mastic bas module, présentant en particulier un bon compromis entre propriétés mécaniques, propriétés élastiques, et propriétés d'adhésion. La composition selon l'invention est avantageusement utile dans le domaine de la construction.

La composition selon l'invention permet avantageusement une bonne adhérence entre les substrats, et permet avantageusement d'éviter l'utilisation de primaire d'adhésion, notamment pour des substrats béton.

Tous les modes de réalisation décrits ci-dessus peuvent être combinés les uns avec les autres. En particulier, les différents constituants susmentionnés, et notamment les modes préférés, de la composition peuvent être combinés les uns avec les autres.

### Utilisations

La présente invention concerne également l'utilisation d'une composition telle que définie ci-dessus, comme adhésif, mastic ou revêtement, de préférence comme mastic, par exemple comme mastic de construction.

La composition peut en particulier servir pour faire des joints d'étanchéité et de dilatation dans les bâtiments, notamment entre substrats béton/béton.

La présente invention concerne aussi l'utilisation d'au moins un silsesquioxane (A) comprenant au moins un groupement phényle et au moins un groupement alcoxy tel que défini ci-dessus, pour préparer une composition, en particulier une composition de mastic, ayant après réticulation:
- un module à 100% d'élongation inférieur ou égal à 0,40 MPa ; et
- une reprise élastique supérieure ou égale à 70%,
la teneur en silsequioxane (A) dans la composition allant de 0,68% à 1,00% en poids par rapport au poids total de ladite composition.

En particulier, l'invention concerne ladite composition comprend :
- de 0,68% à 1,00% en poids d'au moins un silsesquioxane (A) comprenant au moins un groupement phényle et au moins un groupement alcoxy ;
- au moins un polymère silylé comprenant au moins un groupement alkoxysilane, de préférence de 3% à 80% d'au moins un polymère silylé comprenant au moins un groupement alkoxysilane; et
- au moins 25% en poids d'au moins une charge carbonatée,
les pourcentages en poids étant exprimés par rapport au poids total de ladite composition.

Les ingrédients et caractéristiques décrits ci-dessus pour la composition s'appliquent également pour l'utilisation susmentionnée.

Dans le cadre de l'invention, par « comprise entre x et y », ou « allant de x à y », on entend un intervalle dans lequel les bornes x et y sont incluses. Par exemple, la gamme «comprise entre 0,68% et 1,00% » inclus notamment les valeurs 0,68% et 1,00%.

Les exemples suivants illustrent l'invention sans toutefois la limiter.

### PARTIE EXPERIMENTALE

### Préparation des compositions A à F

Les produits suivants ont été utilisés pour la fabrication des compositions de mastic selon l'invention :
- les polymères silylés suivants :
   - GENIOSIL® XB502 (disponible auprès de WACKER) ;
   - MS POLYMER® S 227 (disponible auprès de KANEKA) ;
   - DESMOSEAL® SXP2636 (disponible auprès de BAYER) ;
- SILQUEST® A-1120: catalyseur de type N-(beta-aminoéthyl)-gamma-aminopropyltriméthoxysilane, disponible auprès de la société MOMENTIVE ;
- MIKHART® 1T : carbonate de calcium présentant une densité de 2,7 et une masse volumique apparente non tassée de 0,7 g/cm³ et tassée de 1 g/cm³, disponible auprès de la société LA PROVENCALE ;
- DC 3074 ® (Numéro CAS : 68957-04-0) : diméthyl, méthoxy phenyl, phenyl silsesquioxanes terminé méthoxy, disponible auprès de la Société DOW CORNING ;
- DC 3037® (Numéro CAS : 68957-04-0) : diméthyl, méthoxy phenyl, phenyl silsesquioxanes terminé méthoxy, disponible auprès de la Société DOW CORNING ;
- DBU : catalyseur de réticulation diazabicycloundécène, disponible auprès de SIGMA-ALDRICH ;
- MESAMOLL® : plastifiant ester d'acide alkylsulphonique et de phénol, disponible auprès de la société LANXESS ;
- KRONOS® 2059 : pigment TiO₂, disponible auprès de la Société KRONOS ;
- CRAYVALLAC® SLX : additif rhéologique, disponible auprès de la Société ARKEMA;
- TINUVIN™ 770 : antioxydant de type bis(2,2,6,6-tétramethyl-4-pipéridinyl)sébacate, disponible auprès de la Société BASF ;
- TINUVIN® 328 : absorbeur UV de type benzotriazole, disponible auprès de la Société BASF ;
- DYNASYLAN® VTMO : absorbeur d'humidité vinyltriméthoxysilane, disponible auprès de la Société EVONIK.

Les compositions A à F ont été préparées selon le mode opératoire suivant :

**Tableau 1 : compositions A à F**

| | A (comparative) | B (comparative) | C | D | E | F (comparative) |
|---|---|---|---|---|---|---|
| MS® S 227 | 70,0 | 70,0 | 70,0 | 70,0 | 70,0 | 70,0 |
| DESMOSEAL® SXP2636 | 159,7 | 159,7 | 159,7 | 159,7 | 159,7 | 159,7 |
| MESAMOLL ® | 192,8 | 192,8 | 192,8 | 192,8 | 192,8 | 192,8 |
| KRONOS® 2059 | 19,8 | 19,8 | 19,8 | 19,8 | 19,8 | 19,8 |
| TINUVIN® T770 | 2,5 | 2,5 | 2,5 | 2,5 | 2,5 | 2,5 |
| TI NUVI N® 328 | 2,5 | 2,5 | 2,5 | 2,5 | 2,5 | 2,5 |
| CRAYVALLAC SLX | 35,0 | 35,0 | 35,0 | 35,0 | 35,0 | 35,0 |
| MIKHART® 1T | 497,0 | 497,0 | 497,0 | 497,0 | 497,0 | 497,0 |
| VTMO | 14,8 | 14,8 | 14,8 | 14,8 | 14,8 | 14,8 |
| SILQUEST® A-1120 | 4,9 | 4,9 | 4,9 | 4,9 | 4,9 | 4,9 |
| DBU | 1,0 | 1,0 | 1,0 | 1,0 | 1,0 | 1,0 |
| GENIOSIL® XB-502 | | | 10,0 | | | |
| DC® 3074 | | 5,0 | | 8,0 | 10,0 | 15,0 |

Dans ce tableau 1, les proportions indiquées sont en parties en poids.

Les compositions A, B et F sont des compositions comparatives, dans laquelle la teneur en silsequioxane (A) est :
- égale à 0 (composition A) ;
- inférieure à 0,5% en poids par rapport au poids total de la composition (composition B), ou
- supérieure à 1,4% en poids par rapport au poids total de la composition (composition F).

### Propriétés des compositions réticulées

Les propriétés obtenues des compositions de mastic A à F sont résumées dans le tableau 2 suivant :

**Tableau 2**

| | A (comparative) | B (comparative) | C | D | E | F (comparative) |
|---|---|---|---|---|---|---|
| Temps de formation de peau (en min) | 40 | 50 | 30 | 65 | 40 | 60 |
| Réticulation après 24h (mm) | 3,5 | 3,5 | 3,5 | 3,5 | 3 | 2,5 |
| Vitesse d'extrusion (en g/min) | 85 | 180 | 60 | 133 | 65 | 176 |
| Allongement à la rupture (en %) (substrat béton) | 133 | 228 | 182 | 207 | 213 | 252 |
| Module à 100% élongation (substrat béton) (en MPa) | 0,50 | 0,42 | 0,40 | 0,38 | 0,31 | 0,23 |
| Reprise élastique (en %) | 80 | 75 | 76 | 72 | 70 | 50 |
| Rupture observée durant le test de reprise élastique | 1 | 0 | 0 | 0 | 0 | 0 |

La mesure du temps de formation de peau (ou « skinning time » en anglais) a été réalisée en atmosphère contrôlée à une température de 20°C et une humidité relative d'environ 60%.

La composition a été appliquée à l'aide d'une spatule en bois et sous la forme d'un film mince d'épaisseur environ 0,5 mm, sur une lame de verre de longueur 76 mm et de largeur 26 mm. Sitôt après l'application dudit film, un chronomètre a été mis en route et il a été examiné toutes les minutes à l'aide d'un léger appui du doigt si le film est sec ou si un résidu de composition est transféré sur le doigt. Le temps de formation de peau est le temps au bout duquel le film de composition est sec et pour lequel il n'y a plus aucun transfert de résidu de colle sur le doigt. Le résultat est exprimé en minutes.

La mesure de la résistance et de l'allongement à la rupture (ou « elongation at break » en anglais) par essai de traction a été effectuée selon le protocole décrit ci-après.

Le principe de la mesure consiste à étirer dans une machine de traction, dont la mâchoire mobile se déplace à une vitesse constante égale à 100 mm/minute, une éprouvette standard constituée de la composition réticulée et à enregistrer, au moment où se produit la rupture de l'éprouvette, la contrainte de traction appliquée (en MPa) ainsi que l'allongement de l'éprouvette (en %). L'éprouvette standard est en forme d'haltère, comme illustré dans la norme internationale ISO 37. La partie étroite de l'haltère utilisée a pour longueur 20 mm, pour largeur 4 mm et pour épaisseur 500 µm.

La réticulation après 24h (« cure 24h » en anglais ») consiste à solliciter en pelage à angle droit, un cordon plat du produit à examiner, de largeur constante et d'épaisseur croissante. Ce cordon a été obtenu par remplissage d'une gouttière calibrée, de largeur 10 mm et de profondeur variant linéairement de 0 à 10 mm. Le montage a été réalisé en PTFE. Après application pendant 24 h en enceinte climatisée a 23 °C et 50 % RH, on a relevé à l'aide de graduations le niveau auquel le produit, encore pâteux (non polymérisé sur l'épaisseur) est collé au montage.

Le module à 100% d'élongation a été mesuré selon le test figurant dans la norme ISO11600 de 2002, qui renvoi à la norme ISO8339 de 2005.

La reprise élastique a été déterminée selon le test figurant dans la norme ISO11600 de 2002, qui renvoi à la norme ISO7389 de 2002.

Les résultats du tableau 2 montrent que les compositions selon l'invention C, D et E conduisent avantageusement à des mastics élastiques bas module, dans la mesure où :
- le module à 100% d'élongation est inférieur ou égal à 0,40 MPa ; et
- la reprise élastique est supérieure ou égale à 70%.

Au contraire, les compositions comparatives A, B et F ne présentent pas ces caractéristiques de mastic bas module. Les compositions comparatives A et B ont notamment un module à 100% d'élongation supérieur à 0,40 MPa, tandis que la composition comparative F présente une reprise élastique inférieure à 70%.

Les compositions C, D et E selon l'invention conduisent à des mastics présentant avantageusement un bon compromis entre bonnes propriétés mécaniques, propriétés élastiques et adhésion. Les compositions C, D et E présentent notamment une bonne adhésion sur les substrats béton.

## Revendications

1. Composition comprenant :
- de 0,68% à 1,00% en poids d'au moins un silsesquioxane (A) comprenant au moins un groupement phényle et au moins un groupement alcoxy ;
- au moins un polymère silylé comprenant au moins un groupement alkoxysilane, de préférence de 3% à 80% d'au moins un polymère silylé comprenant au moins un groupement alkoxysilane; et
- au moins 25% en poids d'au moins une charge carbonatée,
les pourcentages en poids étant exprimés par rapport au poids total de ladite composition.

2. Composition selon la revendication 1, dans laquelle le silsesquioxane (A) a la formule générale (I) suivante : 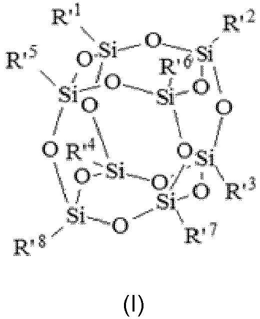 dans laquelle chacun de R'¹ à R'⁸ représente, indépendamment les uns des autres, un groupe choisi parmi :
- un atome d'hydrogène,
- un radical choisi parmi le groupe constitué d'un radical alcoxy linéaire ou ramifié en C₁-C₄, un radical alkyle linéaire ou ramifié comprenant de 1 à 30 atomes de carbone, un radical alcényle comprenant de 2 à 30 atomes de carbone, un radical aromatique comprenant de 6 à 30 atomes de carbone, un radical allyle comprenant de 3 à 30 atomes de carbone, un radical cyclique aliphatique comprenant de 3 à 30 atomes de carbone, un radical acyle comprenant de 1 à 30 atomes de carbone, et
- un groupe -OSiR'⁹R'¹⁰ dans lequel R'⁹ et R'¹⁰ représente chacun, indépendamment l'un de l'autre, un atome d'hydrogène ou un radical choisi dans le groupe constitué des alkyles linéaires ou ramifiés en C₁-C₄, des alcoxys linéaires ou ramifiés en C₁-C₄, des alcényles en C₂-C₄, d'un phényle, d'un radical allyle en C₃-C₆, d'un radical aliphatique cyclique en C₃-C₈, et d'un radical acyle en C₁-C₄ ;
à condition :
- qu'au moins un radical parmi les radicaux R'¹ à R'⁸ soit un radical alcoxy en C₁-C₄; et
- qu'au moins un radical parmi les radicaux R'¹ à R'⁸ soit un radical phényle.

3. Composition selon l'une quelconque des revendications 1 ou 2, dans laquelle le silsesquioxane (A) comprend de 10% à 20% en poids, de préférence de 12% à 20% en poids, préférentiellement de 15% à 18% en poids de groupement alcoxy, de préférence méthoxy.

4. Composition selon l'une quelconque des revendications 1 à 3, dans laquelle le silsesquioxane (A) comprend au moins un groupement méthyle.

5. Composition selon la revendication 4, dans laquelle le silsesquioxane (A) comprend un ratio pondéral groupement(s) phényle : groupement(s) méthyle allant de 1:10 à 10:1, de préférence de 1:5 à 5:1, avantageusement de 1:4 à 4:1, en particulier de 1:2 à 2:1, et préférentiellement ledit ratio est de 1:1 ou de 0,25:1.

6. Composition selon l'une quelconque des revendications 1 à 5, dans laquelle le silsesquioxane (A) a une viscosité à 23°C allant de 10 à 200 mPa.s, de préférence allant de 90 à 150 mPa.s, préférentiellement de 110 à 130 mPa.s.

7. Composition selon l'une quelconque des revendications 1 à 6, dans laquelle le silsesquioxane (A) a une masse molaire moyenne en poids allant de 500 g/mol à 3 000 g/mol, préférentiellement de 800 g/mol à 2 000 g/mol, et avantageusement de 800 g/mol à 1 500 g/mol, par exemple de 800 g/mol à 1 300 g/mol ou de 1 000 g/mol à 1 500 g/mol.

8. Composition selon l'une quelconque des revendications 1 à 7, **caractérisée en ce que** la teneur en silsesquioxane (A) dans ladite composition est choisie parmi l'une des teneurs pondérales suivantes : de 0,68% à 1,00%, de 0,69% à 1,00%, de 0,70% à 1,00%, de 0,71% à 1,00%, de 0,72% à 1,00%, de 0,73% à 1,00%, de 0,74% à 1,00%, de 0,75% à 1,00%, de 0,76% à 1,00%, de 0,77% à 1,00%, de 0,78% à 1,00%, de 0,79% à 1,00%, de 0,80% à 1,00%, de 0,81% à 1,00%, de 0,82% à 1,00%, de 0,83% à 1,00%, de 0,84% à 1,00%, de 0,85% à 1,00%, de 0,86% à 1,00%, de 0,87% à 1,00%, de 0,88% à 1,00%, de 0,89% à 1,00%, de 0,90% à 1,00%, de 0,91% à 1,00%, de 0,92% à 1,00%, de 0,93% à 1,00%, de 0,94% à 1,00%, ou de 0,95% à 1,00%.

9. Composition selon l'une quelconque des revendications 1 à 8, dans laquelle le ratio pondéral polymère(s) silylé(s)/silsesquioxane (A) est compris entre 33 et 22, de préférence entre 32,9 et 22,5, préférentiellement entre 32,85 et 22,97.

10. Composition selon l'une quelconque des revendications 1 à 9, comprenant de 2 à 5, de préférence de 3 à 4,5, et préférentiellement de 3 à 4,4 parties en poids de silsesquioxane (A) pour 100 parties en poids de polymère(s) silylé(s).

11. Composition selon l'une quelconque des revendications 1 à 10, dans laquelle le polymère silylé comportant au moins un groupement alkoxysilane est choisi parmi les polymères de formules (II), (III) ou (IV) telles que définies ci-dessous, et leurs mélanges :
(R⁵O)₃₋ₚ(R⁴)ₚSi-R⁰-[OR²]ₙ-R⁰-Si(R⁴)p(OR⁵)₃₋ₚ (II) 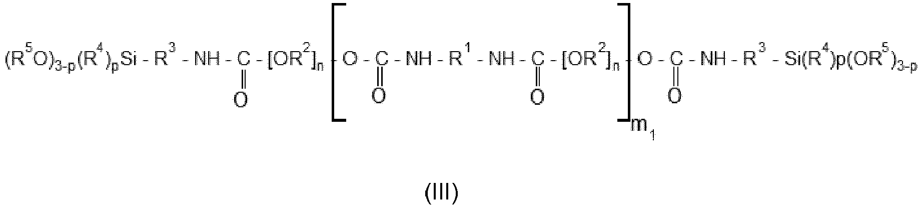 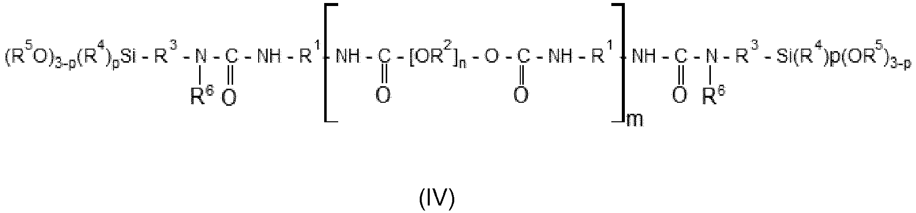
dans lesquelles :
- R¹ représente un radical divalent hydrocarboné comprenant de 5 à 15 atomes de carbone qui peut être aromatique ou aliphatique, linéaire, ramifié ou cyclique,
- R⁰ représente un radical divalent alkylène linéaire ou ramifié comprenant de 3 à 6 atomes de carbone,
- R³ représente un radical divalent alkylène linéaire ou ramifié comprenant de 1 à 6 atomes de carbone, de préférence R³ représentant méthylène ou n-propylène,
- R² représente un radical divalent alkylène linéaire ou ramifié comprenant de 2 à 4 atomes de carbone,
- R⁴ et R⁵, identiques ou différents, représentent chacun un radical alkyle linéaire ou ramifié comprenant de 1 à 4 atomes de carbone, de préférence R⁴ et R⁵ représentant méthyle,
- R⁶ représente un atome d'hydrogène, un radical phényle ou un radical alkyle linéaire, ramifié ou cyclique comprenant de 1 à 6 atomes de carbone, un radical 2-succinate de formule : 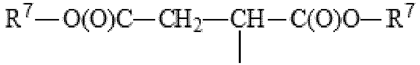 dans laquelle R⁷ est un radical alkyle linéaire ou ramifié comprenant de 1 à 6 atomes de carbone,
- n est un nombre entier tel que la masse moléculaire moyenne en nombre du bloc polyéther de formule -[OR²]ₙ- va de 300 g/mol à 40 000 g/mol,
- m₁ est zéro ou un nombre entier,
- n et m₁ sont tels que la masse moléculaire moyenne en nombre du polymère de formule (III) va de 500 g/mol à 50 000 g/mol, de préférence de 700 g/mol à 20 000 g/mol,
- m est un nombre entier différent de zéro,
- n et m sont tels que la masse moléculaire moyenne en nombre du polymère de formule (IV) va de 500 g/mol à 50 000 g/mol, de préférence de 700 g/mol à 20 000 g/mol,
- p est un nombre entier égal à 0, 1 ou 2, p étant de préférence 0 ou 1.

12. Composition selon la revendication 11, comprenant :
- au moins un polymère de formule (II), et au moins un polymère de formule (III) ; ou
- au moins un polymère de formule (II), et au moins un polymère de formule (IV) ; ou
- au moins un polymère de formule (III), et au moins un polymère de formule (IV); ou
- au moins un polymère de formule (II), au moins un polymère de formule (III), et au moins un polymère de formule (IV).

13. Composition selon l'une quelconque des revendications 11 à 12, dans laquelle le polymère de formule (III) est tel que :
- m₁ est un nombre entier égal ou différent de 0,
- p = 0 ou 1, de préférence p = 0,
- R⁴ et R⁵ représentent chacun un radical méthyle,
- R³ représente un radical divalent méthylène ou n-propylène,
- la masse moléculaire moyenne en nombre dudit polymère va de 5 000 à 30 000 g/mol, préférentiellement de 10 000 à 20 000 g/mol, en particulier de 14 000 à 16 000 g/mol.

14. Composition selon l'une des revendications 11 à 13, dans laquelle le polymère de formule (II) est tel que :
- p = 0 ou 1, de préférence p = 1,
- R⁰ représente un radical divalent n-propylène,
- R⁴ et R⁵ représente chacun un groupement méthyle,
- la masse moléculaire moyenne en nombre dudit polymère va de 5 000 à 30 000 g/mol, de préférence de 10 000 à 20 000 g/mol.

15. Composition selon l'une quelconque des revendications 1 à 14, comprenant :
- de 3% à 80% en poids, de préférence de 5% à 50% en poids, préférentiellement de 10% à 50% en poids, avantageusement de 10% à 40% en poids d'au moins un polymère silylé comportant au moins un groupement alkoxysilane,
- de 0,1% à 1% en poids, de préférence de 0,1% à 0,6% en poids, d'au moins un catalyseur,
- de 25% à 80% en poids, de préférence de 40% à 60% en poids, d'au moins une charge carbonatée,
- de 0%% à 30% en poids, en particulier de 0,1% à 30% en poids, de préférence de 0,5% à 20% en poids, préférentiellement de 0,5% à 15% en poids d'au moins un additif choisi parmi les plastifiants, les solvants, les pigments, promoteurs d'adhérence, les absorbeurs d'humidité, les stabilisants UV, les paillettes, les matériaux fluorescents, les additifs rhéologiques, les charges autres que les charges carbonatées, et leurs mélanges ; et
- de 0,68% à 1,00% en poids, de préférence de 0,69% à 1,00% en poids, préférentiellement de 0,75% à 1,00% en poids, et avantageusement de 0,80% à 1,00% en poids d'au moins un silsesquioxane (A) comprenant au moins un groupement phényle et au moins un groupement alcoxy.

16. Composition selon l'une quelconque des revendications 1 à 15, comprenant :
- de 15% à 80% en poids, préférentiellement de 15% à 50% en poids d'au moins un polymère silylé comportant au moins un groupement alkoxysilane,
- de 0,1% à 1% en poids, de préférence de 0,1% à 0,6% en poids, d'au moins un catalyseur,
- de 25% à 55% en poids, de préférence de 40% à 55% en poids, d'au moins une charge carbonatée,
- de 10% à 30% en poids d'au moins un plastifiant,
- de 0,1% à 3% en poids d'au moins un absorbeur d'humidité,
- de 0,1% à 10% en poids d'au moins une charge autre que la(les) charge(s) carbonaté(es) ;
- de 0,1% à 20% en poids, de préférence de 0,1% à 10% en poids d'au moins un additif choisi parmi les solvants, les pigments, les promoteurs d'adhérence, les stabilisants UV, les paillettes, les matériaux fluorescents, les additifs rhéologiques, et leurs mélanges; et
- de 0,68% à 1,00% en poids, de préférence de 0,69% à 1,00% en poids, préférentiellement de 0,75% à 1,00% en poids, et avantageusement de 0,80% à 1,00% en poids d'au moins un silsesquioxane (A) comprenant au moins un groupement phényle et au moins un groupement alcoxy.

17. Composition selon l'une quelconque des revendications 1 à 16, dans laquelle la charge carbonatée est choisie parmi les carbonates de métaux alcalin ou alcalino-terreux et leurs mélanges, de préférence la charge carbonatée est le carbonate de calcium.

18. Composition selon l'une quelconque des revendications 1 à 16, **caractérisée en ce qu'**elle présente les caractéristiques suivantes après réticulation:
- un module à 100% d'élongation inférieur ou égal à 0,4 MPa ; et
- une reprise élastique supérieure ou égale à 70%.

19. Utilisation d'une composition selon l'une quelconque des revendications 1 à 18, comme adhésif, mastic ou revêtement, de préférence comme mastic, par exemple comme mastic de construction.

20. Utilisation d'au moins un silsesquioxane (A) comprenant au moins un groupement phényle et au moins un groupement alcoxy pour préparer une composition ayant après réticulation:
- un module à 100% d'élongation inférieur ou égal à 0,4 MPa ; et
- une reprise élastique supérieure ou égale à 70%,
la teneur en silsequioxane (A) dans la composition allant de 0,68% à 1,00% en poids par rapport au poids total de ladite composition.

## Patentansprüche

1. Zusammensetzung, umfassend:
- 0,68 bis 1,00 Gew.-% mindestens eines Silsesquioxans (A) mit mindestens einer Phenylgruppe und mindestens einer Alkoxygruppe;
- mindestens ein Silylpolymer mit mindestens einer Alkoxysilangruppe, vorzugsweise 3 bis 80 % mindestens eines Silylpolymers mit mindestens einer Alkoxysilangruppe; und
- mindestens 25 Gew.-% mindestens eines Carbonat-Füllstoffs,
wobei sich die Gewichtsprozentangaben auf das Gesamtgewicht der Zusammensetzung beziehen.

2. Zusammensetzung nach Anspruch 1, wobei das Silsesquioxan (A) die folgende allgemeine Formel (I) aufweist: 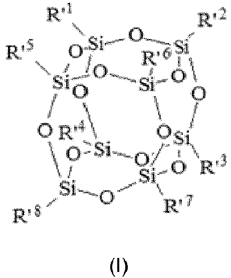 in der R'¹ bis'⁸ jeweils unabhängig voneinander für eine Gruppe stehen, die aus
- einem Wasserstoffatomen,
- einem Rest aus der Gruppe bestehend aus einem linearen oder verzweigten C₁-C₄-Alkoxyrest, einem linearen oder verzweigten Alkylrest mit 1 bis 30 Kohlenstoffatomen, einem Alkenylrest mit 2 bis 30 Kohlenstoffatomen, einem aromatischen Rest mit 6 bis 30 Kohlenstoffatomen, einem Allylrest mit 3 bis 30 Kohlenstoffatomen, einem cyclischen aliphatischen Rest mit 3 bis 30 Kohlenstoffatomen und einem Acylrest mit 1 bis 30 Kohlenstoffatomen und
- einer Gruppe -OSiR'⁹R'¹⁰, in der R'⁹ und R'¹⁰ jeweils unabhängig voneinander für ein Wasserstoffatom oder einen Rest aus der Gruppe bestehend aus linearen oder verzweigten C₁-C₄-Alkylresten, linearen oder verzweigten C₁-C₄-Alkoxyresten, C₂-C₄-Alkenylresten, einem Phenyl, einem C₃-C₆-Allylrest, einem aliphatischen cyclischen C₃-C₈-Rest und einem C₁-C₄-Acylrest stehen,
ausgewählt ist;
mit der Maßgabe:
- dass mindestens ein Rest unter den Resten R'¹ bis R'⁸ ein C₁-C₄-Alkoxyrest ist und
- dass mindestens ein Rest unter den Resten R'¹ bis R'⁸ ein Phenylrest ist.

3. Zusammensetzung nach einem der Ansprüche 1 oder 2, wobei das Silsesquioxan (A) 10 bis 20 Gew.-%, vorzugsweise 12 bis 20 Gew.-%, bevorzugt 15 bis 18 Gew.-%, Alkoxygruppen, vorzugsweise Methoxygruppen, umfasst.

4. Zusammensetzung nach einem der Ansprüche 1 bis 3, wobei das Silsesquioxan (A) mindestens eine Methylgruppe umfasst.

5. Zusammensetzung nach Anspruch 4, wobei das Silsesquioxan (A) ein Gewichtsverhältnis von Phenylgruppe(n) zu Methylgruppe(n) im Bereich von 1:10 bis 10:1, vorzugsweise 1:5 bis 5:1, vorteilhafterweise 1:4 bis 4:1 und insbesondere 1:2 bis 2:1 aufweist und das Verhältnis bevorzugt 1:1 oder 0,25:1 beträgt.

6. Zusammensetzung nach einem der Ansprüche 1 bis 5, wobei das Silsesquioxan (A) eine Viskosität bei 23 °C im Bereich von 10 bis 200 mPa.s, vorzugsweise im Bereich von 90 bis 150 mPa.s, bevorzugt von 110 bis 130 mPa.s, aufweist.

7. Zusammensetzung nach einem der Ansprüche 1 bis 6, wobei das Silsesquioxan (A) eine gewichtsmittlere Molmasse im Bereich von 500 g/mol bis 3000 g/mol, bevorzugt von 800 g/mol bis 2000 g/mol und vorteilhafterweise von 800 g/mol bis 1500 g/mol, beispielsweise von 800 g/mol bis 1300 g/mol oder 1000 g/mol bis 1500 g/mol, aufweist.

8. Zusammensetzung nach einem der Ansprüche 1 bis 7, **dadurch gekennzeichnet, dass** der Gehalt an Silsesquioxan (A) in der Zusammensetzung aus einem der folgenden Gewichtsgehalte ausgewählt ist: von 0,68 % bis 1,00 %, von 0,69 % bis 1,00 %, von 0,70 % bis 1,00 %, von 0,71 % bis 1,00 %, von 0,72 % bis 1,00 %, von 0,73 % bis 1,00 %, von 0,74 % bis 1,00 %, von 0,75 % bis 1,00 %, von 0,76 % bis 1,00 %, von 0,77 % bis 1,00 %, von 0,78 % bis 1,00 %, von 0,79 % bis 1,00 %, von 0,80 % bis 1,00 %, von 0,81 % bis 1,00 %, von 0,82 % bis 1,00 %, von 0,83 % bis 1,00 %, von 0,84 % bis 1,00 %, von 0,85 % bis 1,00 %, von 0,86 % bis 1,00 %, von 0,87 % bis 1,00 %, von 0,88 % bis 1,00 %, von 0,89 % bis 1,00 %, von 0,90 % bis 1,00 %, von 0,91 % bis 1,00 %, von 0,92 % bis 1,00 %, von 0,93 % bis 1,00 %, von 0,94 % bis 1,00 % oder von 0,95 % bis 1,00 %.

9. Zusammensetzung nach einem der Ansprüche 1 bis 8, wobei das Gewichtsverhältnis von Silylpolymer(en) zu Silsesquioxan (A) zwischen 33 und 22, vorzugsweise zwischen 32,9 und 22,5, bevorzugt zwischen 32,85 und 22,97, liegt.

10. Zusammensetzung nach einem der Ansprüche 1 bis 9, umfassend 2 bis 5, vorzugsweise 3 bis 4,5 und bevorzugt 3 bis 4,4 Gewichtsteile Silsesquioxan (A) auf 100 Gewichtsteile Silylpolymer(e).

11. Zusammensetzung nach einem der Ansprüche 1 bis 10, wobei das Silylpolymer mit mindestens einer Alkoxysilangruppe aus den Polymeren der Formeln (II), (III) oder (IV) gemäß nachstehender Definition und Mischungen davon ausgewählt ist:
(R⁵O)₃₋ₚ(R⁴)ₚSi-R⁰-[OR²]ₙ-R⁰-Si(R⁴)p(OR⁵)₃₋ₚ **(II)** 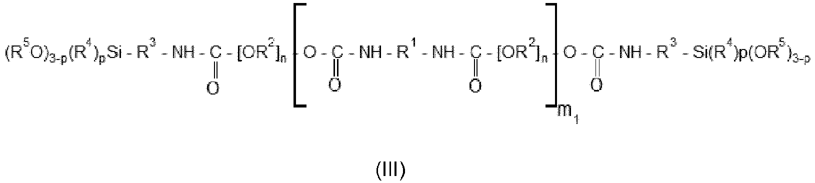 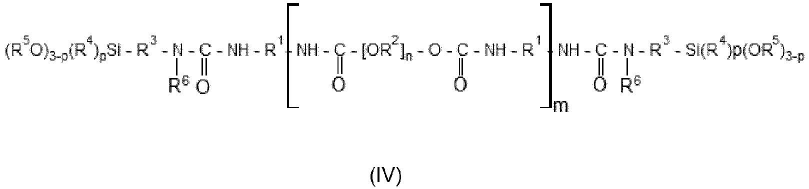
in denen:
- R¹ für einen zweiwertigen Kohlenwasserstoffrest mit 5 bis 15 Kohlenstoffatomen steht, der aromatisch oder aliphatisch, linear, verzweigt oder cyclisch sein kann,
- R⁰ für einen linearen oder verzweigten zweiwertigen Alkylenrest mit 3 bis 6 Kohlenstoffatomen steht,
- R³ für einen linearen oder verzweigten zweiwertigen Alkylenrest mit 1 bis 6 Kohlenstoffatomen steht, vorzugsweise R³ für Methylen oder n-Propylen steht,
- R² für einen linearen oder verzweigten zweiwertigen Alkylenrest mit 2 bis 4 Kohlenstoffatomen steht,
- R⁴ und R⁵ gleich oder verschieden sind und jeweils für einen linearen oder verzweigten Alkylrest mit 1 bis 4 Kohlenstoffatomen stehen, vorzugsweise R⁴ und R⁵ für Methyl stehen,
- R⁶ für ein Wasserstoffatom, einen Phenylrest oder linearen, verzweigten oder cyclischen Alkylrest mit 1 bis 6 Kohlenstoffatomen, einen 2-Succinatrest der Formel: 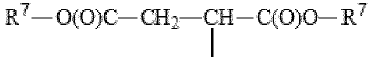 steht, in der R⁷ ein linearer oder verzweigter Alkylrest mit 1 bis 6 Kohlenstoffatomen ist,
- n eine solche ganze Zahl ist, dass die zahlenmittlere Molmasse des Polyetherblocks der Formel -[OR²]ₙ- im Bereich von 300 g/mol bis 40.000 g/mol liegt,
- m₁ 0 oder eine ganze Zahl ist,
- n und m₁ so beschaffen sind, dass die zahlenmittlere Molmasse des Polymers der Formel (III) im Bereich von 500 g/mol bis 50.000 g/mol, vorzugsweise von 700 g/mol bis 20.000 g/mol, liegt,
- m eine von null verschiedene ganze Zahl ist,
- n und m so beschaffen sind, dass die zahlenmittlere Molmasse des Polymers der Formel (IV) im Bereich von 500 g/mol bis 50.000 g/mol, vorzugsweise von 700 g/mol bis 20.000 g/mol, liegt,
- p eine ganze Zahl mit einem Wert von 0, 1 oder 2 ist, wobei p vorzugsweise 0 oder 1 ist.

12. Zusammensetzung nach Anspruch 11, umfassend:
- mindestens ein Polymer der Formel (II) und mindestens ein Polymer der Formel (III) oder
- mindestens ein Polymer der Formel (II) und mindestens ein Polymer der Formel (IV) oder
- mindestens ein Polymer der Formel (III) und mindestens ein Polymer der Formel (IV) oder
- mindestens ein Polymer der Formel (II), mindestens ein Polymer der Formel (III) und mindestens ein Polymer der Formel (IV).

13. Zusammensetzung nach einem der Ansprüche 11 bis 12, wobei das Polymer der Formel (III) so beschaffen ist, dass:
- m₁ eine ganze Zahl ist, die gleich 0 oder von 0 verschieden ist,
- p = 0 oder 1, vorzugsweise p = 0,
- R⁴ und R⁵ jeweils für einen Methylrest stehen,
- R³ für einen zweiwertigen Methylen- oder n-Propylenrest steht,
- die zahlenmittlere Molmasse des Polymers im Bereich von 5000 bis 30.000 g/mol, bevorzugt von 10.000 bis 20.000 g/mol, insbesondere von 14.000 bis 16.000 g/mol, liegt.

14. Zusammensetzung nach einem der Ansprüche 11 bis 13, wobei das Polymer der Formel (II) so beschaffen ist, dass:
- p = 0 oder 1, vorzugsweise p = 1,
- R⁰ für einen zweiwertigen n-Propylenrest steht,
- R⁴ und R⁵ jeweils für eine Methylgruppe stehen,
- die zahlenmittlere Molmasse des Polymers im Bereich von 5000 bis 30.000 g/mol, bevorzugt von 10.000 bis 20.000 g/mol, liegt.

15. Zusammensetzung nach einem der Ansprüche 1 bis 14, umfassend:
- 3 bis 80 Gew.-%, vorzugsweise 5 bis 50 Gew.-%, bevorzugt 10 bis 50 Gew.-%, vorteilhafterweise 10 bis 40 Gew.-%, mindestens eines Silylpolymers mit mindestens einer Alkoxysilangruppe,
- 0,1 bis 1 Gew.-%, vorzugsweise 0,1 bis 0,6 Gew.-%, mindestens eines Katalysators,
- 25 bis 80 Gew.-%, vorzugsweise 40 bis 60 Gew.-%, mindestens eines Carbonat-Füllstoffs,
- 0 bis 30 Gew.-%, insbesondere 0,1 bis 30 Gew.-%, vorzugsweise 0,5 bis 20 Gew.-%, bevorzugt 0,5 bis 15 Gew.-%, mindestens eines Additivs, das aus Weichmachern, Lösungsmitteln, Pigmenten, Haftvermittlern, Feuchtigkeitsabsorbern, UV-Stabilisatoren, Flitter, fluoreszierenden Substanzen, Rheologieadditiven, Füllstoffen, die von Carbonat-Füllstoffen verschieden sind, und Mischungen davon ausgewählt ist; und
- 0,68 bis 1,00 Gew.-%, vorzugsweise 0,69 bis 1,00 Gew.-%, bevorzugt 0,75 bis 1,00 Gew.-% und vorteilhafterweise 0,80 bis 1,00 Gew.-% mindestens eines Silsesquioxans (A) mit mindestens einer Phenylgruppe und mindestens einer Alkoxygruppe.

16. Zusammensetzung nach einem der Ansprüche 1 bis 15, umfassend:
- 15 bis 80 Gew.-%, vorzugsweise 15 bis 50 Gew.-%, mindestens eines Silylpolymers mit mindestens einer Alkoxysilangruppe,
- 0,1 bis 1 Gew.-%, vorzugsweise 0,1 bis 0,6 Gew.-%, mindestens eines Katalysators,
- 25 bis 55 Gew.-%, vorzugsweise 40 bis 55 Gew.-%, mindestens eines Carbonat-Füllstoffs,
- 10 bis 30 Gew.-% mindestens eines Weichmachers,
- 0,1 bis 3 Gew.-% mindestens eines Feuchtigkeitsabsorbers,
- 0,1 bis 10 Gew.-% mindestens eines Füllstoffs, der von dem Carbonat-Füllstoff bzw. von den Carbonat-Füllstoffen verschieden ist,
- 0,1 bis 20 Gew.-%, vorzugsweise 0,1 bis 10 Gew.-%, mindestens eines Additivs, das aus Lösungsmitteln, Pigmenten, Haftvermittlern, UV-Stabilisatoren, Flitter, fluoreszierenden Substanzen, Rheologieadditiven und Mischungen davon ausgewählt ist; und
- 0,68 bis 1,00 Gew.-%, vorzugsweise 0,69 bis 1,00 Gew.-%, bevorzugt 0,75 bis 1,00 Gew.-% und vorteilhafterweise 0,80 bis 1,00 Gew.-% mindestens eines Silsesquioxans (A) mit mindestens einer Phenylgruppe und mindestens einer Alkoxygruppe.

17. Zusammensetzung nach einem der Ansprüche 1 bis 16, wobei der Carbonat-Füllstoff aus Alkalimetall- oder Erdalkalimetallcarbonaten und Mischungen davon ausgewählt ist, vorzugsweise der Carbonat-Füllstoff Calciumcarbonat ist.

18. Zusammensetzung nach einem der Ansprüche 1 bis 16, **dadurch gekennzeichnet, dass** sie nach Vernetzung der folgenden Eigenschaften aufweist:
- einen Modul bei 100 % Dehnung kleiner oder gleich 0,4 MPa und
- ein Rückstellvermögen größer oder gleich 70 %.

19. Verwendung einer Zusammensetzung nach einem der Ansprüche 1 bis 18 als Klebstoff, Dichtstoff oder Beschichtung, vorzugsweise als Dichtstoff, beispielsweise als Baudichtstoff.

20. Verwendung mindestens eines Silsesquioxans (A) mit mindestens einer Phenylgruppe und mindestens einer Alkoxygruppe zur Herstellung einer Zusammensetzung, die nach Vernetzung
- einen Modul bei 100 % Dehnung kleiner oder gleich 0,4 MPa und
- ein Rückstellvermögen größer oder gleich 70 % aufweist, wobei der Gehalt an Silsesquioxan (A) in der Zusammensetzung im Bereich von 0,68 bis 1,00 Gew.-%, bezogen auf das Gesamtgewicht der Zusammensetzung, liegt.

## Claims

1. A composition comprising:
- from 0.68% to 1.00% by weight of at least one silsesquioxane (A) comprising at least one phenyl group and at least one alkoxy group;
- at least one silylated polymer comprising at least one alkoxysilane group, preferably from 3% to 80% of at least one silylated polymer comprising at least one alkoxysilane group; and
- at least 25% by weight of at least one carbonate filler,
the percentages by weight being expressed with respect to the total weight of said composition.

2. The composition as claimed in claim 1, in which the silsesquioxane (A) has the following general formula (I): 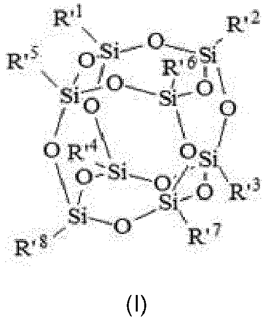 in which each of R'¹ to R'⁸ represents, independently of one another, a group chosen from:
- a hydrogen atom,
- a radical chosen from the group consisting of a linear or branched C₁-C₄ alkoxy radical, a linear or branched alkyl radical comprising from 1 to 30 carbon atoms, an alkenyl radical comprising from 2 to 30 carbon atoms, an aromatic radical comprising from 6 to 30 carbon atoms, an allyl radical comprising from 3 to 30 carbon atoms, a cyclic aliphatic radical comprising from 3 to 30 carbon atoms and an acyl radical comprising from 1 to 30 carbon atoms, and
- an -OSiR'⁹R'¹⁰ group in which R'⁹ and R'¹⁰ each represents, independently of each other, a hydrogen atom or a radical chosen from the group consisting of linear or branched C₁-C₄ alkyls, linear or branched C₁-C₄ alkoxys, C₂-C₄ alkenyls, a phenyl, a C₃-C₆ allyl radical, a cyclic C₃-C₈ aliphatic radical and a C₁-C₄ acyl radical;
provided:
- that at least one radical among the R'¹ to R'⁸ radicals is a C₁-C₄ alkoxy radical; and
- that at least one radical among the R'¹ to R'⁸ radicals is a phenyl radical.

3. The composition as claimed in either one of claims 1 and 2, in which the silsesquioxane (A) comprises from 10% to 20% by weight, preferably from 12% to 20% by weight, preferentially from 15% to 18% by weight, of alkoxy group, preferably methoxy group.

4. The composition as claimed in any one of claims 1 to 3, in which the silsesquioxane (A) comprises at least one methyl group.

5. The composition as claimed in claim 4, in which the silsesquioxane (A) comprises a phenyl group(s):methyl group(s) ratio by weight ranging from 1:10 to 10:1, preferably from 1:5 to 5:1, advantageously from 1:4 to 4:1, in particular from 1:2 to 2:1, and preferably said ratio is 1:1 or 0.25:1.

6. The composition as claimed in any one of claims 1 to 5, in which the silsesquioxane (A) has a viscosity at 23°C ranging from 10 to 200 mPa.s, preferably ranging from 90 to 150 mPa.s, preferentially from 110 to 130 mPa.s.

7. The composition as claimed in any one of claims 1 to 6, in which the silsesquioxane (A) has a weight-average molar mass ranging from 500 g/mol to 3000 g/mol, preferentially from 800 g/mol to 2000 g/mol and advantageously from 800 g/mol to 1500 g/mol, for example from 800 g/mol to 1300 g/mol or from 1000 g/mol to 1500 g/mol.

8. The composition as claimed in any one of claims 1 to 7, **characterized in that** the content of silsesquioxane (A) in said composition is chosen from one of the following contents by weight: from 0.68% to 1.00%, from 0.69% to 1.00%, from 0.70% to 1.00%, from 0.71% to 1.00%, from 0.72% to 1.00%, from 0.73% to 1.00%, from 0.74% to 1.00%, from 0.75% to 1.00%, from 0.76% to 1.00%, from 0.77% to 1.00%, from 0.78% to 1.00%, from 0.79% to 1.00%, from 0.80% to 1.00%, from 0.81% to 1.00%, from 0.82% to 1.00%, from 0.83% to 1.00%, from 0.84% to 1.00%, from 0.85% to 1.00%, from 0.86% to 1.00%, from 0.87% to 1.00%, from 0.88% to 1.00%, from 0.89% to 1.00%, from 0.90% to 1.00%, from 0.91% to 1.00%, from 0.92% to 1.00%, from 0.93% to 1.00%, from 0.94% to 1.00%, or from 0.95% to 1.00%.

9. The composition as claimed in any one of claims 1 to 8, in which the silylated polymer(s)/silsesquioxane (A) ratio by weight is between 33 and 22, preferably between 32.9 and 22.5, preferentially between 32.85 and 22.97.

10. The composition as claimed in any one of claims 1 to 9, comprising from 2 to 5, preferably from 3 to 4.5 and preferentially from 3 to 4.4 parts by weight of silsesquioxane (A) per 100 parts by weight of silylated polymer(s).

11. The composition as claimed in any one of claims 1 to 10, in which the silylated polymer comprising at least one alkoxysilane group is chosen from the polymers of formulae (II), (III) or (IV) as defined below, and their mixtures:
(R⁵O)₃₋ₚ(R⁴)ₚSi-R⁰-[OR²]ₙ-R⁰-Si(R⁴)p(OR⁵)₃₋ₚ (II) 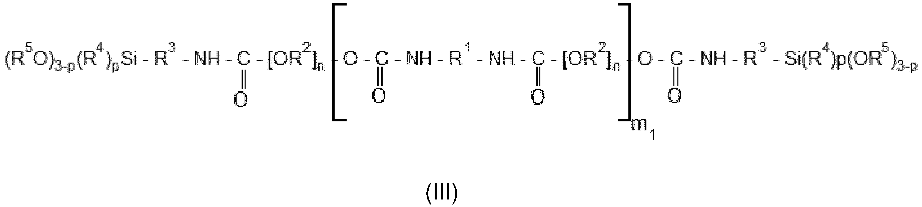 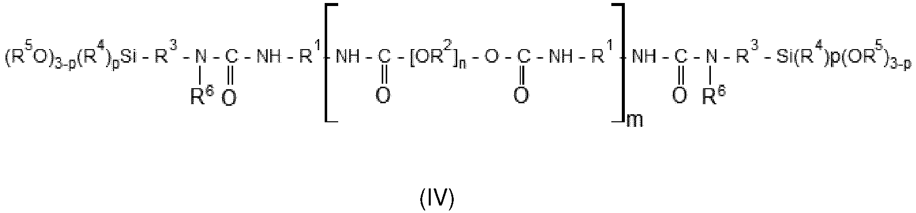
in which:
- R¹ represents a divalent hydrocarbon radical comprising from 5 to 15 carbon atoms which can be aromatic or aliphatic and linear, branched or cyclic,
- R⁰ represents a linear or branched divalent alkylene radical comprising from 3 to 6 carbon atoms,
- R³ represents a linear or branched divalent alkylene radical comprising from 1 to 6 carbon atoms, R³ preferably representing methylene or n-propylene,
- R² represents a linear or branched divalent alkylene radical comprising from 2 to 4 carbon atoms,
- R⁴ and R⁵, which are identical or different, each represent a linear or branched alkyl radical comprising from 1 to 4 carbon atoms, R⁴ and R⁵ preferably representing methyl,
- R⁶ represents a hydrogen atom, a phenyl radical or a linear, branched or cyclic alkyl radical comprising from 1 to 6 carbon atoms, a 2-succinate radical of formula: 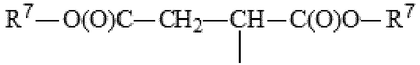 in which R⁷ is a linear or branched alkyl radical comprising from 1 to 6 carbon atoms,
- n is an integer such that the number-average molecular weight of the polyether block of formula -[OR²]ₙ- ranges from 300 g/mol to 40 000 g/mol,
- m₁ is zero or an integer,
- n and m₁ are such that the number-average molecular weight of the polymer of formula (III) ranges from 500 g/mol to 50 000 g/mol, preferably from 700 g/mol to 20 000 g/mol,
- m is an integer other than zero,
- n and m are such that the number-average molecular weight of the polymer of formula (IV) ranges from 500 g/mol to 50 000 g/mol, preferably from 700 g/mol to 20 000 g/mol,
- p is an integer equal to 0, 1 or 2, p preferably being 0 or 1.

12. The composition as claimed in claim 11, comprising:
- at least one polymer of formula (II) and at least one polymer of formula (III); or
- at least one polymer of formula (II) and at least one polymer of formula (IV); or
- at least one polymer of formula (III) and at least one polymer of formula (IV); or
- at least one polymer of formula (II), at least one polymer of formula (III) and at least one polymer of formula (IV).

13. The composition as claimed in either one of claims 11 and 12, in which the polymer of formula (III) is such that:
- m₁ is an integer equal to or different from 0,
- p = 0 or 1, preferably p = 0,
- R⁴ and R⁵ each represent a methyl radical,
- R³ represents a divalent methylene or n-propylene radical,
- the number-average molecular weight of said polymer ranges from 5000 to 30 000 g/mol, preferably from 10 000 to 20 000 g/mol, in particular from 14 000 to 16 000 g/mol.

14. The composition as claimed in one of claims 11 to 13, in which the polymer of formula (II) is such that:
- p = 0 or 1, preferably p = 1,
- R⁰ represents a divalent n-propylene radical,
- R⁴ and R⁵ each represent a methyl group,
- the number-average molecular weight of said polymer ranges from 5000 to 30 000 g/mol, preferably from 10 000 to 20 000 g/mol.

15. The composition as claimed in any one of claims 1 to 14, comprising:
- from 3% to 80% by weight, preferably from 5% to 50% by weight, preferentially from 10% to 50% by weight, advantageously from 10% to 40% by weight, of at least one silylated polymer comprising at least one alkoxysilane group,
- from 0.1% to 1% by weight, preferably from 0.1% to 0.6% by weight, of at least one catalyst,
- from 25% to 80% by weight, preferably from 40% to 60% by weight, of at least one carbonate filler,
- from 0% to 30% by weight, in particular from 0.1% to 30% by weight, preferably from 0.5% to 20% by weight, preferentially from 0.5% to 15% by weight, of at least one additive chosen from plasticizers, solvents, pigments, adhesion promoters, desiccants, UV stabilizers, glitter, fluorescent materials, rheological additives, fillers other than carbonate fillers, and their mixtures, and
- from 0.68% to 1.00% by weight, preferably from 0.69% to 1.00% by weight, preferentially from 0.75% to 1.00% by weight and advantageously from 0.80% to 1.00% by weight of at least one silsesquioxane (A) comprising at least one phenyl group and at least one alkoxy group.

16. The composition as claimed in any one of claims 1 to 15, comprising:
- from 15% to 80% by weight, preferably from 15% to 50% by weight, of at least one silylated polymer comprising at least one alkoxysilane group,
- from 0.1% to 1% by weight, preferably from 0.1% to 0.6% by weight, of at least one catalyst,
- from 25% to 55% by weight, preferably from 40% to 55% by weight, of at least one carbonate filler,
- from 10% to 30% by weight of at least one plasticizer,
- from 0.1% to 3% by weight of at least one desiccant,
- from 0.1% to 10% by weight of at least one filler other than carbonate filler(s),
- from 0.1% to 20% by weight, preferably from 0.1% to 10% by weight, of at least one additive chosen from solvents, pigments, adhesion promoters, UV stabilizers, glitter, fluorescent materials, rheological additives and their mixtures, and
- from 0.68% to 1.00% by weight, preferably from 0.69% to 1.00% by weight, preferentially from 0.75% to 1.00% by weight and advantageously from 0.80% to 1.00% by weight of at least one silsesquioxane (A) comprising at least one phenyl group and at least one alkoxy group.

17. The composition as claimed in any one of claims 1 to 16, in which the carbonate filler is chosen from alkali metal or alkaline earth metal carbonates and their mixtures; preferably, the carbonate filler is calcium carbonate.

18. The composition as claimed in any one of claims 1 to 16, **characterized in that** it exhibits the following characteristics after crosslinking:
- a modulus at 100% elongation of less than or equal to 0.4 MPa; and
- an elastic recovery of greater than or equal to 70%.

19. The use of a composition as claimed in any one of claims 1 to 18, as adhesive, sealant or coating, preferably as sealant, for example as construction sealant.

20. The use of at least one silsesquioxane (A) comprising at least one phenyl group and at least one alkoxy group for preparing a composition having, after crosslinking:
- a modulus at 100% elongation of less than or equal to 0.4 MPa; and
- an elastic recovery of greater than or equal to 70%,
the content of silsesquioxane (A) in the composition ranging from 0.68% to 1.00% by weight, with respect to the total weight of said composition.
